# EUROPEAN PATENT SPECIFICATION

(11) **EP 2 472 266 B1**
(45) Date of publication and mention of the grant of the patent: **12.06.2019**
(21) Application number: 11194255.3
(22) Date of filing: 19.12.2011
(51) Int. Cl.: G01N 35/00

(54) **Sample processing system**
Probenverarbeitungssystem
Système de traitement d'échantillons

(30) Priority: 28.12.2010 JP 2010292124
(43) Date of publication of application: 04.07.2012
(73) Proprietor: Sysmex Corporation, Kobe-shi, Hyogo 651-0073 (JP)
(72) Inventor: Tatsutani, Hiroo, Hyogo, 651-0073 (JP)
(74) Representative: Hoffmann Eitle

(56) References cited:
- EP-A2- 2 172 781
- JP-A- H1 151 942
- JP-A- 2004 301 760
- US-A1- 2010 101 339

## Description

### FIELD OF THE INVENTION

The present invention relates to a sample processing system for carrying out processes such as measurement of sample, preparation of smear, and the like.

### BACKGROUND

A sample processing device for processing blood, urine, or the like based on a process order is conventionally known.

U.S. Patent Application Publication No. 2010/0101339 discloses a sample processing system for displaying a transportation status of a sample by a test information management device. A screen of the test information management device described in U.S. Patent Application Publication No. 2010/0101339 includes an analysis result list display region of displaying analysis results in a list, and a transportation status display region in which a layout diagram of the sample processing system is displayed. In the analysis result list display region, "Pending" indicating waiting of measurement result is displayed for the measurement items in which the measurement is executed by the measurement unit but the measurement result is not yet obtained, and numerical value information of the analysis result is displayed for the measurement items in which the measurement is completed. In the layout diagram of the transportation status display region, a mark indicating the current position of the sample rack is drawn, where the transportation path of the sample rack that passed is drawn with a solid line and the transportation path of the sample rack that has not passed is drawn with a broken line.

U.S. Patent Application Publication No. 2008/0071503 discloses a specimen measuring device for generating measurement information including state information indicating the state of measurement according to the progress of measurement, and displaying the measurement information. A plurality of measurement information is displayed in a form of a list in a screen of the specimen measurement device described in U.S. Patent Application Publication No. 2008/0071503. The measurement information includes data items such as sample number, rack number, measurement state (non-measurement, in-measurement, normal termination, confirmation requirement termination, error termination), or the like. The measurement information is generated when order registration of the measurement is carried out, where each data item of the generated measurement information is generated or updated when the order registration of the measurement is carried out, when the measurement is started, when the measurement result of each measurement item is obtained, and all the measurements are terminated.

In such sample processing system, the process order executed by the sample processing device is issued by LIS since the user normally registers the process order in the LIS (Laboratory Information System) or a host computer for managing information related to test. However, assuming a case where communication abnormality of the LIS and the sample processing device occurred, the process order is to be issued by the sample processing device itself. That is, the issuing source of the process order may exist in plurals. However, in the sample processing system described in U.S. Patent Application Publication No. 2010/0101339 and the specimen measurement device described in U.S. Patent Application Publication No. 2008/0071503, the operation history of the device that may issue the process order of the host computer, the sample processing device, and the like needs to be investigated when the user tries to find out the issuing source of the process order upon confirming the progress situation of the sample process, and a very complex task is involved.

In view of such situations, it is a main object of the present invention to provide a sample processing system enabling the user to easily grasp the issuing source of the process order.

### SUMMARY OF THE INVENTION

The scope of the present invention is defined solely by the appended claims, and is not affected to any degree by the statements within this summary.
(1) According to a first aspect of the present invention, a sample processing system comprising:
   a plurality of process order issuing units, each process order issuing unit configured to issue a process order for instructing processing of a sample;
   a sample processing unit that processes the sample based on a process order issued by one of the process order issuing units;
   a display unit; and
   a controller configured to cause the display unit to display progress information indicating a progress situation of the processing of the sample based on the process order issued by the one of the process order issuing units, wherein the progress information includes identification information for identifying the process order issuing unit that issued the process order.
(2) The sample processing system according to (1), wherein
   when a plurality of process orders are issued with respect to one sample, the controller is configured to cause the display unit to display order progress information of each issued process order related to the one sample as the progress information.
(3) The sample processing system according to (1) or (2), wherein
   the progress information displayed on the display unit includes issued time information indicating an issued time at which the process order was issued.
(4) The sample processing system according to (2) or (3), wherein
   the process order issuing unit is configured to issue a first process order and then issue a second process order based on a result of sample processing according to the first process order, and
   the controller is configured to cause the display unit to display the order progress information for each of the first process order and the second process order.
(5) The sample processing system according to (4), wherein
   the order progress information displayed on the display unit includes additional order information indicating that the second process order is an additional process order.
(6) The sample processing system according to (5), wherein
   the sample processing unit is configured to process the sample for a plurality of processing items and is configured to execute a first re-process of again processing a sample, which was processed for a sample processing item, for the same sample processing item and a second re-process of again processing a sample, which was processed for a sample processing item, for a different processing item; and the additional order information is information for identifying the first re-process and the second re-process.
(7) The sample processing system according to any one of (1) to (6), wherein
   the progress information displayed on the display unit includes sample processing information indicating whether or not the sample processing instructed in the issued process order has been carried out.
(8) The sample processing system according to any one of (1) to (7), wherein
   the progress information displayed on the display unit includes abnormality occurrence information indicating that abnormality occurred in the sample processing unit for carrying out the sample processing according to the issued process order.
(9) The sample processing system according to any one of (1) to (8), wherein
   the plurality of process order issuing units include a first computer configured to control the sample processing unit and display a processing result by the sample processing unit.
(10) The sample processing system according to any one of (9), wherein
   the first computer includes the controller and the display unit.
(11) The sample processing system according to (9) or (10), wherein
   the plurality of process order issuing units include a second computer communicably connected to another sample processing unit different from the sample processing unit controlled by the first computer, wherein the second computer manages processing results of the sample processing unit controlled by the first computer and the another sample processing unit.
(12) The sample processing system according to any one of (1) to (11), further comprising:
   a transport device that transports the sample;
   a plurality of sample processing units, each configured to process the sample transported by the transport device based on the process order issued by the one of the process order issuing units; and
   a third computer configured to control the transport device, wherein
   the third computer includes the controller and the display unit.
(13) The sample processing system according to any one of (1) to (12), further comprising:
   a transport device that transports the sample;
   a plurality of sample processing units , each configured to process the sample transported by the transport device based on the process order issued by the one of the process order issuing units; and
   a third computer configured to control the transport device, wherein
   the plurality of process order issuing units include the third computer.
(14) The sample processing system according to (13), wherein
   the plurality of process order issuing units include a blood cell analyzer that analyzes a blood cell contained in blood and a smear preparing device that prepares a smear.
(15) The sample processing system according to any one of (1) to (14), wherein
   the sample processing unit is a sample measurement device that measures the sample,
   the process order is a measurement order for measuring the sample with the sample measurement device, and
   the process order issuing unit issues the measurement order as the process order.
(16) The sample processing system according to (15), wherein
   the sample processing unit is a blood cell analyzer that analyzes a blood cell contained in blood.
(17) The sample processing system according to any one of (1) to (16), wherein
   the plurality of process order issuing units include a first computer configured to control the sample processing unit and display a processing result by the sample processing unit, and a second computer communicably connected to another sample processing unit different from the sample processing unit controlled by the first computer, wherein the second computer manages processing results of the sample processing unit controlled by the first computer and the another sample processing unit, and
   the controller displays information indicating the first computer as the identification information when the process order is issued by the first computer and displays information indicating the second computer as the identification information when the process order is issued by the second computer.
(18) The sample processing system according to any one of (17), wherein
   the first computer is configured to issue a second processing order based on the result of sample processing according to the first process order, and
   the second computer is configured to issue a second process order based on the result of sample processing according to the first process order.
(19) The sample processing system according to any one of (1) to (18), wherein
   the controller is configured to display a progress screen for displaying the progress information on the display unit,
   the process order issuing unit is configured to additionally issue a second process order for the sample to which the first process order is issued,
   the progress screen includes a first process order region for displaying progress information corresponding to the first process order and a second process order region for displaying progress information corresponding to the second process order when the first process order and the second process order are issued,
   the first process order region includes a first progress information region for displaying first progress information showing progress of processing of the sample based on the first process order and a first identification information region for displaying first identification information for identifying the process order issuing unit that issued the first process order, and
   the second process order region includes a second progress information region for displaying second progress information showing progress of processing of the sample based on the second process order and a second identification information region for displaying second identification information for identifying the process order issuing unit that issued the second process order.
(20) The sample processing system according to (19), wherein
   the controller displays the first process order region in one row, and displays the second process order region in one row in the progress screen.
(21) The sample processing system according to (20), wherein
   when a second process order is issued after a first process order is issued, the controller displays the second process order region in a row under the first process order region in the progress screen.
(22) The sample processing system according to any one of (1) to (21), further comprising an input device for inputting identification information identifying a sample, wherein
   the controller is configured to cause the display unit to display the progress information related to the sample input by the input device.

According to the configuration of (1), the user can easily grasp in which process order issuing unit the process order is issued.

According to the configuration of (2), the user can easily grasp in which process order issuing unit the process order is issued.

According to the configuration of (3), the user can easily grasp when and in which process order issuing unit the process order is issued.

According to the configuration of (4), the user can easily grasp in which process order issuing unit the process order is issued even if the process order issuing unit automatically issues the process order.

According to the configuration of (7), the user can easily grasp whether the processing of the sample is completed for the process order issued by the process order issuing unit.

According to the configuration of (8), the user can easily grasp in which process order issued by which process order issuing unit the abnormality occurred.

According to the configuration of (17), the user can easily grasp whether the process order is issued by a first computer and the process order is issued by a second computer.

According to the configuration of (19) the user can easily grasp in which process order issuing unit the process order is issued by simply looking at one screen.

According to the configuration of (20), the user can easily grasp in which process order issuing unit the process order is issued by simply looking at one screen even if the issued process order is in plurals since the plurality of issued process orders are respectively displayed in one row.

According to the configuration of (21) the user can check the process order in the issued order in one screen, and can easily grasp in which process order issuing unit the process order is issued even if the issued process order is in plurals.

According to the configuration of (22) the user can easily check the progress information related to the sample input by the input device even if a plurality of samples are processed.

### BRIEF DESCRIPTION OF THE DRAWINGS

Fig. 1 is a schematic plan view showing an overall configuration of a sample processing system according to a first embodiment;
Fig. 2 is a perspective view showing an outer appearance of a sample container;
Fig. 3 is a perspective view showing an outer appearance of the sample rack;
Fig. 4 is a block diagram showing a configuration of a measurement unit arranged in a blood cell analyzer according to the first embodiment;
Fig. 5 is a block diagram showing a schematic configuration of the smear preparing device according to the first embodiment;
Fig. 6 is a block diagram showing a configuration of a system control device according to the first embodiment;
Fig. 7 is a schematic view showing a structure of a sample process progress database;
Fig. 8 is a plan view showing another arrangement example of the sample processing system;
Fig. 9 is a view showing a display example of the layout diagram of the sample processing system;
Fig. 10 is a flowchart showing the procedure of the measurement order acquiring process of the system control device;
Fig. 11 is a schematic view showing an example of a progress situation table.
Fig. 12 is a schematic view showing an example of the progress situation table in which the progress information when the barcode reading error occurred is registered.
Fig. 13A is a flowchart showing the procedure of the transport control processing of the system control device (first half);
Fig. 13B is a flowchart showing the procedure of the transport control processing of the system control device (second half);
Fig. 14 is a schematic view showing an example of the progress situation table;
Fig. 15 is a schematic view describing the update of the progress situation table of when the additional measurement order is generated by the blood cell analyzer;
Fig. 16 is a schematic view describing the update of the progress situation table of when the measurement order is changed;
Fig. 17 is a schematic view showing an example of a progress situation table in which the progress information is updated based on the additional measurement order;
Fig. 18 is a flowchart showing the procedure of the progress situation displaying process of the system control device;
Fig. 19A is a schematic view showing an example of the progress situation screen according to a first embodiment;
Fig. 19B is a schematic view showing an example of the progress situation screen according to the first embodiment;
Fig. 19C is a schematic view showing an example of the progress situation screen according to the first embodiment;
Fig. 19D is a schematic view showing an example of the progress situation screen according to the first embodiment;
Fig. 20A is a schematic view showing an example of the progress situation screen according to the first embodiment;
Fig. 20B is a schematic view showing an example of the progress situation screen according to the first embodiment;
Fig. 20C is a schematic view showing an example of the progress situation screen according to the first embodiment;
Fig. 20D is a schematic view showing an example of the progress situation screen according to the first embodiment;
Fig. 20E is a schematic view showing an example of the progress situation screen according to the first embodiment;
Fig. 20F is a schematic view showing an example of the progress situation screen according to the first embodiment;
Fig. 21 is a schematic perspective view showing an overall configuration of a sample processing system according to a second embodiment;
   and Fig. 22 is a schematic view showing an example of the progress situation screen according to the second embodiment.

### DETAILED DESCRIPTION OF THE PREFERRED EMBODIMENTS

### (First embodiment)

Hereinafter, preferred embodiments of the present invention will be described with reference to the drawings.

### [Configuration of sample processing system]

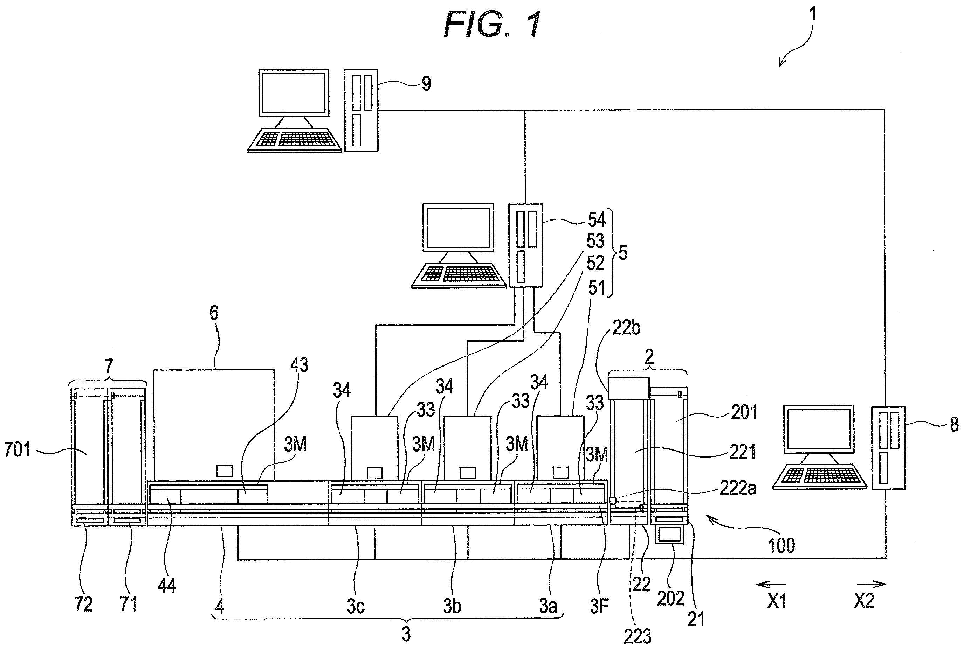

Fig. 1 is a schematic plan view showing an overall configuration of a sample processing system according to a first embodiment. As shown in Fig. 1, a sample processing system 1 includes a sample sending device 2, a sample transporting device 3, a blood cell analyzer 5, a smear preparing device 6, a sample collecting device 7, and a system control device 8. The sample processing system 1 according to the present embodiment is communicably connected to a test information management device 9 through a communication network. The sample sending device 2, the sample transporting device 3, and the sample collecting device 7 configure a sample transport system 100.

The sample transporting device 3 includes sample transporting units 3a, 3b, 3c, and 4, where the sample transporting units 3a, 3b, 3c, and 4 are connected in series to each other so as to extend in a horizontal direction in the figure. The blood cell analyzer 5 includes three measurement units 51, 52, 53 and an information processing unit 54, where the measurement unit 51 is arranged on the back side of the sample transporting unit 3a, the measurement unit 52 is arranged on the back side of the sample transporting unit 3b, and the measurement unit 53 is arranged on the back side of the sample transporting unit 3c. The smear preparing device 6 is arranged on the back side of the sample transporting unit 4.

The sample transporting device 3 is linearly arranged in a horizontal direction over all the sample transport units 3a, 3b, 3c, and 4, and includes a transportation line 3F for transporting the sample rack holding a plurality of samples to the left direction in the figure. Each sample transporting unit 3a, 3b, 3c, and 4 has a measurement line 3M for transporting the sample rack L to supply the sample to the measurement units 51, 52, 53 and the smear preparing device 6 extended in the left and right direction. A pre-measurement rack holder 33 and a pre-processing rack holder 43 or a transfer path for transferring the sample rack from a transport line 3F to a starting point of the measurement line 3M or a region for holding the sample rack, and a post-measurement rack holder 34 and a post-processing rack holder 44 or a transfer path for transferring the sample rack from the terminating point of the measurement point 3M to the transport line 3F or a region for holding the sample rack are arranged between the transportation line 3F and each measurement line 3M.

The sample sending device 2 capable of sending the sample rack is connected to the right end of the sample transporting device 3, where the sample rack sent by the sample sending device 2 is transported by the transport line 3F of the sample transporting device 3. The sample collecting device 7 capable of collecting the sample rack is connected to the left end of the sample transporting device 3. The sample rack is transferred to the measurement line 3M through the pre-measurement rack holder 33 or the pre-processing rack holder 43 in the sample transport units 3a, 3b, 3c or 4 corresponding to the measurement units 51, 52, 53 or the smear preparing device 6 of the transporting destination from the transport line 3F, transported on the measurement line 3M, and supplied to the measurement units 51, 52, 53 or the smear preparing device 6 or the transporting destination. In the present embodiment, the sample is supplied to the measurement units 51, 52, 53 or the smear preparing device 6, and thereafter, the sample rack L is transferred again to the transport line 3F through the post-measurement rack holder 34 or the post-processing rack holder 44 from the measurement line 3M, transported in the left direction by the transport line 3F and collected by the sample collecting device 7.

The sample collecting device 7 is separable from the left end of the sample transporting device 3, and may be connectable to the right side of the sample sending device 2, for example. Thus, the sample collecting device 7 according to the present embodiment may change the arrangement, and may be arranged at an appropriate position in accordance with the facility. The configuration of the relevant sample processing system 1 will be described in detail below.

### <Configuration of sample sending device 2>

The sample sending device 2 includes a rack accommodating unit 21 and a barcode reading unit 22. The sample sending device 2 can mount a plurality of sample containers accommodated in the sample rack.

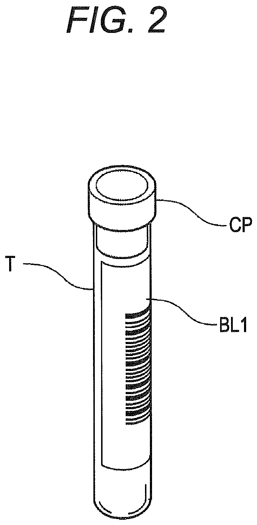

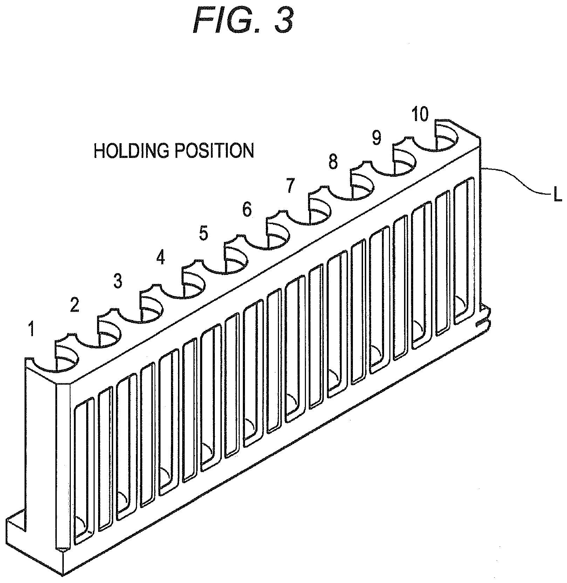

Fig. 2 is a perspective view showing the outer appearance of the sample container, and Fig. 3 is a perspective view showing the outer appearance of the sample rack. As shown in Fig. 2, the sample container T has a tubular shape which upper end is opened. The blood sample collected from a patient is accommodated inside, and the opening at the upper end is sealed by a lid CP. A barcode label BL1 is attached to the side surface of the sample container T. A barcode (sample barcode) indicating a sample ID is printed on the barcode label BL1. As shown in Fig. 3, the sample rack L can hold ten sample containers T in a line. In the sample rack L, each sample container T is held in a perpendicular state (standing state) . A barcode label is attached to the side surface on the measurement unit side between a holding position 1 and a holding position 2 of the sample rack L (not shown) . A barcode (rack barcode) indicating a rack ID is printed on the barcode label.

As shown in Fig. 1, the rack accommodating unit 21 has a recessed rack accommodating portion 201 at the upper surface. The rack accommodating portion 201 has a rectangular shape, and can simultaneously accommodate a plurality of sample racks L. The sample rack L is accommodated in the rack accommodating portion 201 so that the sample containers T are lined in the horizontal direction. The rack accommodating portion 201 includes a transfer mechanism for transferring the sample rack L (not shown), and the sample rack L is transferred to the back side on the rack accommodating portion 201 by the transfer mechanism.

A send-out mechanism for sending out the sample rack is arranged on the left side at the position (carry-out position) on the most far side (back side) of the rack accommodating portion 201, where the sample rack transferred up to the carry-out position by the transfer mechanism is transferred to the left side by the send-out mechanism, and carried out to the barcode reading unit 22.

The rack accommodating unit 21 having the above configuration includes a control unit (not shown) including a CPU, a memory, and the like. The mechanism of the rack accommodating unit 21 is controlled by the control unit. The rack accommodating unit 21 has an Ethernet (registered trademark) interface, and can be connected to other devices to communicate with such other devices (information processing unit 54 and system control device 8) through the LAN. The rack accommodating unit 21 includes an operation panel 202, so that the user can operate the operation panel 202 to give various instructions to the rack accommodating unit 21.

The barcode reading unit 22 is connected to the left side of the rack accommodating unit 21. The barcode reading unit 22 includes a rack mounting portion 221 having a square shape in plan view capable of accommodating a plurality of sample racks L. The barcode reading unit 22 includes a barcode reader 22b at the far side of the rack mounting portion 221. The barcode reader 22b can simultaneously read the sample barcodes of the plurality of sample containers T accommodated in the sample rack L, and can also read the rack barcode of the sample rack L. The barcode reader 22b includes an optical sensor for detecting the sample container T (not shown), where the presence or absence of the sample container T is detected by the optical sensor when the sample rack L reaches the barcode reading position by the barcode reader 22b. The barcode reader 22b also includes a horizontal rotation mechanism (not shown) for horizontally rotating the plurality of sample containers T simultaneously at immediately above the barcode reading position on the most far side in the rack mounting portion 221. The sample rack L sent from the carry-out position of the rack accommodating unit 21 is carried in to the barcode reading unit 22 in the left direction thus reaching the barcode reading position. Thereafter, the sample ID is read out from the barcode label of the sample container T by the barcode reader 22b and the rack ID is read out from the barcode label of the sample rack L while the sample container T accommodated in the sample rack L is horizontally rotated by means of the horizontal rotation mechanism.

The rack mounting portion 221 includes a transfer mechanism (not shown) for transferring the sample rack L, which transfer mechanism transfers the sample rack L in which the sample barcode and the rack barcode are read by the barcode reader 22b to the front side. A send-out mechanism (not shown) for sending out the sample rack is arranged on the left side at the position (rack sending position) 223 on the most front side (back side) of the rack mounting portion 221, where the sample rack transferred up to the rack sending position 223 by the transfer mechanism is transferred to the left side and carried out from the barcode reading unit 22. The sample rack L sent out from the barcode reading unit 22 is introduced to the transport line 3F of the sample transporting device 3 in such manner.

A barcode reader 222a for reading the rack barcode is arranged in the vicinity of the rack sending position 223 of the barcode reading unit 22. The rack ID of the sample rack L is read by the barcode reader 222a, and the read rack ID is transmitted to the system control device 8. As will be described later, the system control device 8 receives such rack ID and determines the transporting destination of the sample rack L.

The barcode reading unit 22 having the above configuration includes a control unit (not shown) including a CPU, a memory, and the like. The mechanism of the barcode reading unit 22 is controlled by the control unit. The barcode reading unit 22 has an Ethernet (registered trademark) interface, and can be communicably connected to the information processing unit 54 and the system control device 8 through the LAN .

### <Configuration of sample transporting device 3>

The configuration of the sample transporting device 3 will now be described. As shown in Fig. 1, the sample processing system 1 is equipped with the sample transporting device 3 including four sample transport units 3a, 3b, 3c, and 4. The sample transport units 3a, 3b, 3c are respectively arranged on the front side of the three measurement units 51, 52, 53 of the blood cell analyzer 5. Two adjacent sample transport units of the sample transport units 3a, 3b, 3c are connected to each other, so that the sample rack L can be exchanged. The sample transport unit 3a on the most right side is connected to the sample sending device 2 described above, and the transport line 3F is arranged to linearly connect to the rack sending position 223 of the barcode reading unit 22. The sample rack L carried out from the sample sending device 2 then can be introduced to the transport line 3F.

The sample rack L carried out from the sample sending device 2 to the sample transporting device 3 is transported in the left direction in the figure by the transport line 3F. The sample transporting device 3 makes the sample rack L transported on the transport line 3F to temporarily wait at the pre-measurement rack holder 33 and the pre-processing holder 43 and then transfers the same to the measurement line 3M to transport the sample rack L to the measurement units 51, 52, 53 or the smear preparing device 6 according to the instruction of the transporting destination given from the system control device 8. Each sample transport unit 3a, 3b, 3c, 4 transfers the sample rack L of after the sample is supplied to the measurement units 51, 52, 53 or the smear preparing device 6 from the terminating point of the measurement line 3M to the post-measurement rack holder 34 and the post-processing rack holder 44, makes the sample rack to temporarily wait at the post-measurement rack holder 34 and the post-processing rack holder 44, and can thereafter transfer the sample rack to the transport line 3F. The sample rack L transferred on the transport line 3F is transported to the downstream side (left side) in the transporting direction along the transport line 3F.

That is, the transport path of the sample rack L in the sample transporting device 3 is branched to the pre-measurement rack holder 33 (or pre-processing rack holder 44) and the transport line 3F at the position on the front side of the pre-measurement rack holder 33 (or pre-processing rack holder 44) in the transport line 3F. As will be described later, the transporting destination of the sample rack L is determined while the sample rack L is stopped at the rack sending position 223 of the barcode reading unit 22 in the case of the first test. That is, the transporting destination of the sample rack L is determined before the sample rack L reaches the branched point of the transport path in the sample transport unit 3a on the most upstream side in the transporting direction. For instance, in a case where the transporting destination of the sample rack L is the measurement unit 51, the sample rack L is transferred from the branched point of the sample transport unit 3a to the pre-measurement rack holder 33. In a case where the transporting destination of the sample rack L is the measurement unit 52 or 53, or the smear preparing device 6, the sample rack L is transported from the branched point of the sample transport unit 3a to the downstream side in the transporting direction of the transport line 3F.

If an additional measurement of the sample is carried out after the first test, the sample rack L is stopped at the terminating end position of the transport line 3F of the sample transport unit corresponding to the measurement unit in which the first test is carried out, and the next transporting destination is determined in the meantime based on the additional measurement order. For instance, when an additional measurement order of the sample in which the first test is carried out in the measurement unit 51 is generated, the system control device inquires the additional measurement order and determines the next transporting destination while the sample rack L is at the terminating end position of the transport line 3F of the sample transport unit 3a. That is, the transporting destination of the sample rack is determined before the sample rack L reaches the branched point of the sample transport unit 3b or the next branched point of the measurement unit 51 in which the first test is carried out. If the next transporting destination is the measurement unit 52, the sample rack L is introduced to the sample transport unit 3b and transferred to the pre-measurement rack holder 33 at the branched point. If the next transporting destination is the measurement unit 53 or the smear preparing device 6, the sample rack L is transported to the downstream side of the transport line 3F from the branched point of the sample transport unit 3b.

### <Configuration of blood cell analyzer 5>

The blood cell analyzer 5 is a multi-item blood cell analyzer of an optical flow cytometry method that acquires scattered light intensity, fluorescent intensity, and the like related to the blood cell contained in the blood sample, categorizes the blood cell contained in the sample based thereon, and counts the number of blood cells for every type. The blood cell analyzer 5 creates a scattergram in which the categorized blood cells are color coded for every type, and displays the same. The blood cell analyzer 5 is configured by the measurement units 51, 52, 53 for measuring the blood sample, and an information processing unit 54 configured by a computer for processing the measurement data output from the measurement units 51, 52, 53 and displaying the analysis result of the blood sample.

As shown in Fig. 1, the blood cell analyzer 5 includes three measurement units 51, 52, 53,
and one information processing unit 54. The information processing unit 54 is communicably connected to the three measurement units 51, 52, 53, and can control the operation of the three measurement units 51, 52, 53. The information processing unit 54 is also communicably connected to the three sample transport units 3a, 3b, 3c respectively arranged on the front side of the three measurement units 51, 52, 53.

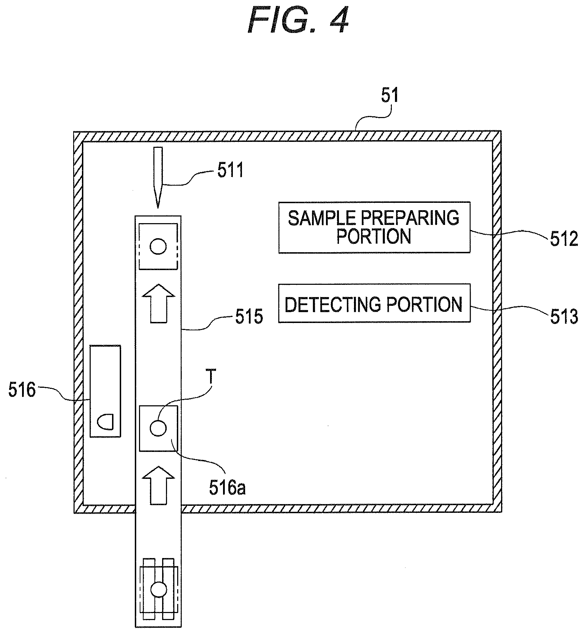

Fig. 4 is a block diagram showing a configuration of the measurement unit 51. As shown in Fig. 4, the measurement unit 51 includes a sample aspirating portion 511 for aspirating the blood or the sample from the sample container (blood collecting tube) T, a specimen preparing portion 512 for preparing a measurement specimen to be used in the measurement from the blood aspirated by the sample aspirating portion 511, and a detecting portion 513 for detecting the blood cell from the measurement specimen prepared by the specimen preparing portion 512. The measurement unit 51 further includes a take-in port (not shown) for taking in the sample container T accommodated in the sample rack L transported by the measurement line 3M of the sample transport unit 3a to the interior of the measurement unit 51, a sample container transporting portion 515 for taking in the sample container T from the sample rack L to the interior of the measurement unit 51 and transporting the sample container T to the aspirating position by the sample aspirating portion 511, and a barcode reader 516 for reading the sample ID from the barcode of the sample container T taken into the measurement unit 51.

The detecting portion 513 can carry out the RBC (red blood cell) detection and the PLT (blood platelet) detection through the sheath flow DC detection method. The detecting portion 513 is configured to carry out the HGB (hemoglobin) detection through the SLS-hemoglobin method, and can carry out the WBC (white blood cell) detection through the flow cytometry method using a semiconductor laser. Each measurement item of RBC, PLT, HGB, WBC is included in the measurement item "CBC". That is, when the measurement of the CBC is instructed by the measurement order, the measurement of the sample is carried out for each item of RBC, PLT, HGB, WBC.

The detecting portion 513 can carry out the measurement of the white blood cell category (measurement item "DIFF") through the flow cytometry method using the semiconductor laser. In the white blood cell category measurement, the reagent for the white blood cell category is mixed with the sample, the specimen or the mixed liquid is supplied to the flow cytometer, and the optical information (lateral scattered light, forward scattered light, fluorescent light) generated when the light is irradiated on the blood cell contained in the specimen are detected. The optical information is output to the information processing unit 54, which information processing unit carries out data processing to categorize the white blood cells in the sample into five sub-classes (NEUT (neutrophil cells), LYMPH (lymphocytes), EO (eosinocytes), BASO (basocytes), and MONO (monocytes)), and counts the number of blood cells of each sub-class.

The measurement unit 52 has a configuration similar to the measurement unit 51, and includes the sample aspirating portion, the specimen preparing portion, the detecting portion, and the sample container transporting portion.

The measurement unit 53 can measure the RET (reticulocytes) through the flow cytometry method using the semiconductor laser other than the CBC and the DIFF. Other than being able to measure the RET, the measurement unit 53 has a configuration similar to the measurement unit 51, and includes the sample aspirating portion, the specimen preparing portion, the detecting portion, and the sample container transporting portion.

### <Configuration of smear preparing device 6>

The smear preparing device 6 aspirates the blood sample and drops the same on a slide glass, thinly stretches the blood sample on the slide glass, dries the blood sample, and supplies a stain fluid to the slide glass to stain the blood on the slide glass to prepare the smear.

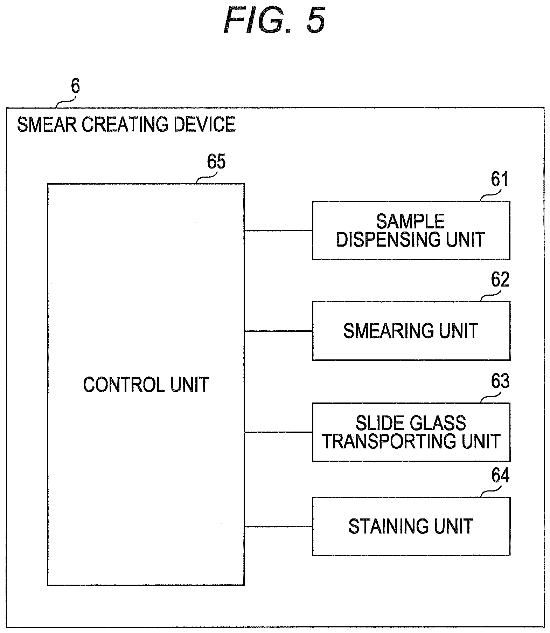

Fig. 5 is a block diagram showing a schematic configuration of the smear preparing device 6. As shown in Fig. 5, the smear preparing device 6 includes a sample dispensing unit 61, a smearing unit 62, a slide glass transporting unit 63, a staining unit 64, and a control unit 65.

The sample dispensing unit 61 includes an aspirating tube (not shown), where such aspirating tube is pierced to the lid CP of the sample container T of the sample rack L transported on the measurement line 3M of the sample transport unit 4 to aspirate the blood sample from the sample container T. The sample dispensing unit 61 is configured to drop the aspirated blood sample on the slide glass. The smearing unit 62 smears and dries the blood sample dropped on the slide glass, and further prints out to the slide glass.

The slide glass transporting unit 63 is arranged to accommodate the slide glass on which the blood sample is smeared by the smearing unit 62 to a cassette (not shown), and transport such cassette. The staining unit 64 supplies the stain fluid to the slide glass in the cassette transported up to the staining position by the slide glass transporting unit 63. The control unit 65 controls the sample dispensing unit 61, the smearing unit 62, the slide glass transporting unit 63, and the staining unit 64 according to the measurement order provided from the test information management device 9, and executes the smear preparing operation.

When instructing the preparation of the smear by the smear preparing device 6, the measurement order "SP" is specified in the measurement order, as will be described later. That is, when the measurement order including the measurement item "SP" is provided to the sample processing system 1 for a certain sample, the smear of the relevant sample is prepared by the smear preparing device 6. The smear preparing device 6 prepares the smear of the sample and does not measure the sample, but the process order on the smear preparing device 6 is also expressed as the measurement order for the sake of convenience in the present embodiment.

### <Configuration of sample collecting device 7>

The sample collecting device 7 is configured to be able to mount a plurality of sample racks L. The relevant sample collecting device 7 is configured by connecting two rack accommodating units 71, 72. The rack accommodating units 71, 72 have a configuration similar to the rack accommodating unit 21 of the sample sending device 2, and include a rack accommodating portion 701, and a belt conveyor arranged before and after the rack accommodating portion 701. The rack accommodating unit 71 is connected to the left end of the sample transport unit 4, and is arranged such that the belt conveyor on the front side is linearly connected to the transport line 3F of the sample transport unit 4. The rack accommodating unit 71 and the rack accommodating unit 72 are connected to each other, and are arranged such that the belt conveyors on the back side are linearly connected. The sample collecting device 7 thus receives the sample rack L accommodating the sample in which analysis or smear preparation is finished from the transport line 3F of the sample transporting device 3, and accommodates the same.

### <Configuration of system control device 8>

The system control device 8 is configured by a computer, and controls the entire sample processing system 1. The system control device 8 receives the rack ID and the sample ID from the sample sending device 2, and makes an inquiry on the measurement order to the test information management device 9 by the rack ID and the sample ID. The system control device 8 determines the transporting destination of the sample rack L, and transmits a transportation command indicating the transporting destination to the sample transporting device 3.

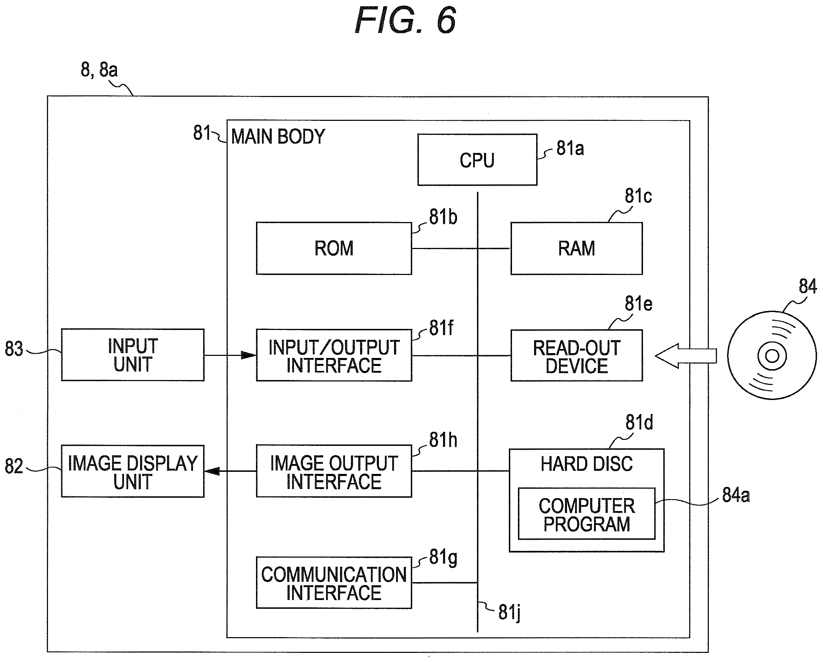

Fig. 6 is a block diagram showing a configuration of the system control device 8 according to the present embodiment. The system control device 8 is realized by a computer 8a. As shown in Fig. 6, the computer 8a includes a main body 81, an image display unit 82, and an input unit 83. The main body 81 is mainly configured by a CPU 81a, a ROM 81b, a RAM 81c, a hard disc 81d, a read-out device 81e, an input/output interface 81f, a communication interface 81g, and an image output interface 81h, where the CPU 81a, the ROM 81b, the RAM 81c, the hard disc 81d, the read-out device 81e, the input/output interface 81f, the communication interface 81g and the image output interface 81h are connected by a bus 81j.

The read-out device 81e can read out a system control program 84a for causing the computer to function as the system control device 8 from a portable recording medium 84, and install the system control program 84a in the hard disc 81d.

The communication interface 81g is the Ethernet (registered trademark) interface, and is communicably connected to each of the sample sending device 2, the sample transporting device 3, the blood cell analyzer 5, the smear preparing device 6, the sample collecting device 7, and the test information management device 9.

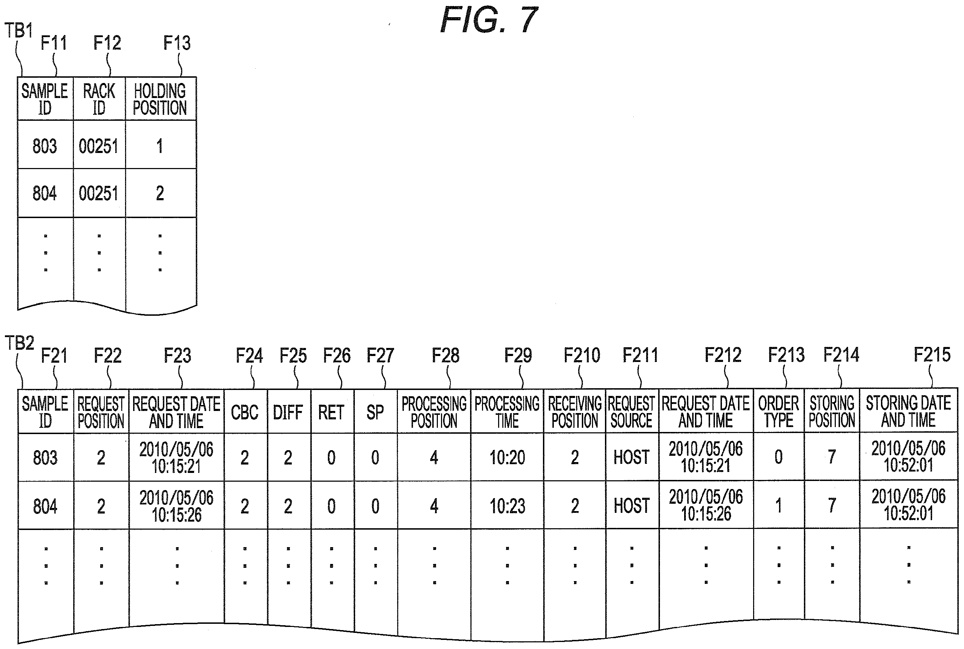

The hard disc 81d includes a sample process progress database. Fig. 7 is a schematic view showing a structure of the sample process progress database. The sample process progress database DB is a relational database, and includes a sample information table TB1 for storing the sample information, and a progress situation table TB2 for storing data indicating the progress situation of the process on each measurement order. The sample information table TB1 stores information related to the sample in each record. More specifically, the sample information table TB1 includes a field F11 for storing the sample ID, a field F12 for storing the rack ID, and a field F13 for storing a holding position number in the sample rack L.

As shown in Fig. 7, the sample ID such as "803" and "804" is stored in the field F11 of the sample information table TB1, the rack ID such as "00251" is stored in the field F12, and the holding position number such as "1" and "2" is stored in the field F13.

The progress situation table TB2 stores the measurement order of the sample and the information related to the progress of the sample process based on the measurement order in each record. Specifically, the progress situation table TB2 includes a field F21 for storing the sample ID, a field F22 for storing request position information indicating the position (request position) of the sample rack L of when the measurement order is requested from the system control device 8, a field F23 for storing request date and time information indicating the date and time of when the measurement order is requested from the system control device 8, fields F24 to F27 for storing information indicating presence or absence of measurement order, presence or absence of processing result, presence or absence of cancellation of measurement order, and presence or absence of occurrence of measurement error for each item of CBC, DIFF, RET, and SP, a field F28 for storing process position information indicating the processing position (unit that executed process) of when the processing of the sample is carried out, a field F29 for storing process time information indicating the time at which the processing of the sample is carried out, a field F210 for storing receiving position information indicating the position of the sample on the transport path of when the system control device 8 accepts the measurement order, a field F211 for storing request source information indicating the transmission source of the measurement order, that is, the request source of the measurement, a field F212 for storing request date and time information indicating the date and time at which the measurement order is transmitted from the transmission source, that is, the request date and time of the measurement, a field F213 for storing type information indicating the type of the requested measurement order, a field F214 for storing storing position information indicating the storing position (unit accommodating sample) of when the sample is stored (accommodated) in the sample collecting device 7, and a field F215 for storing the storing date and time information indicating the date and time at which the sample is stored in the sample collecting device 7.

As shown in Fig. 7, the field F21 of the progress situation table TB2 stores the sample ID such as "803", "804", the field F22 stores the position information of the sample rack such as "2", and the field F23 stores the request date and time information such as "2010/05/06 10:15:21". The fields F24 to F27 stores state date indicating the presence or absence of measurement order, presence or absence of processing result, presence or absence of cancellation of measurement order, and presence or absence of occurrence of measurement error. The state data is data of one of "0", "1", "2", "3", "4", where "0" means that there is no measurement order, "1" means that there is measurement order but there is no processing result (i.e., non-processed), "2" means that there is processing result (i.e., processed), "3" means that the measurement order is cancelled and "4" means that measurement error occurred. The field F28 stores the processing position information such as "3", "4", "5", and "6", and the field F29 stores the processing time information such as "10:20", "10:31", and "10:43". The field F210 stores the receiving position information such as "2" , "4", and "5", and the field F211 stores the request source information such as "HOST". The request source information is data of one of "HOST", "IPU", "CT-90", "Manual", or "SP", where "HOST" indicates the test information management device 9, "IPU" indicates the information processing unit 54, "CT-90" indicates the system control device 8, "Manual" indicates "manual" and "SP" indicates the smear preparing device 6. The field F212 stores the request date and time information such as "2010/05/06 10:15:21", and the field F213 stores the type information of the measurement order of "Rerun", "Repeat", "Reflex", "Default". The "Rerun", "Repeat", "Reflex" are types of measurement order (additional measurement order) instructing to again carry out the measurement for the sample on which the measurement is executed once. "Rerun" is the type of measurement order instructing the operation to again carry out the measurement of the same sample on the measurement item same as the measurement item in the sample measurement of the first time, and "Repeat" is the type of measurement order instructing the operation to again carry out the sample measurement on the same measurement item in the same measurement unit 51 (52, 53) as the measurement of the first time. "Reflex" is the type of measurement order instructing the operation to carry out the sample measurement on the measurement item including the measurement item different from the measurement item in the sample measurement of the first time. "Default" is the measurement order specified in advance that is used when the inquiry of the measurement order fails due to reading error of the barcode, or the like. The details of "Rerun", "Repeat", "Reflex", and "Default" will be described later. The field F213 stores "0" when the measurement order is the normal type (i.e., measurement order other than "Rerun", "Repeat", "Reflux", and "Default"). The field F213 stores "1" when the type of measurement order is "Rerun", the field F213 stores "2" when the type of measurement order is "Repeat", the field F213 stores "3" when the type of measurement order is "Reflex", and the field F213 stores "4" when the type of measurement order is "Default". The field F214 stores the storing position information of the sample rack such as "7", and the field F215 stores the storing date and time information such as "2010/05/06 10:52:01". The position information stored in the fields F22, F28, F210, F214 are information indicating the position on the transport path of the sample processing system 1, and the position number of the unit to be described later is used.

### <Configuration of test information management device 9>

The test information management device 9 is a device for managing information related to tests in the facility or a so-called LIS (Laboratory Information System), and is connected not only to the blood cell analyzer 5 but also to other clinical sample test devices. The relevant test information management device 9 receives input from the operator, receives the measurement order transmitted from other devices such as an electronic medical record, and stores and manages the measurement order. Furthermore, the test information management device 9 receives the order request from the system control device 8 or the blood cell analyzer 5, and transmits the requested measurement order to the system control device 8 or the blood cell analyzer 5. The test information management device 9 also receives the analysis result from the blood cell analyzer 5, and stores and manages the analysis result. If the received measurement result is deviated from the reference defined in advance, the test information management device 9 generates an additional measurement order including the additional measurement item, and stores the same in the hard disc. Similar to the test information management device 9, the information processing unit 54 also generates the additional measurement order including the additional measurement item and stores the same in the hard disc if the received measurement result is deviated from the reference defined in advance. Which one of the test information management device 9 or the information processing unit 54 generates the additional measurement order including the additional measurement item is set in advance.

The test information management device 9 is configured by a computer and includes a CPU, a ROM, a RAM, a hard disc, a communication interface, and the like. The communication interface is connected to the LAN as described above to be able to communicate with the system control device 8 and the information processing unit 54 of the blood cell analyzer 5. The measurement order is also stored in the hard disc. The measurement order includes information of the sample ID and the measurement item to be performed. When receiving the request data of the measurement order including the sample ID from another device, the test information management device 9 is configured to read out the measurement data corresponding to the sample ID from the hard disc, and transmit the same to the device of the request source. The configuration of the test information management device 9 is similar to the configuration of other computers described above, and hence the description thereof will be omitted.

### <Arrangement of sample processing system 1>

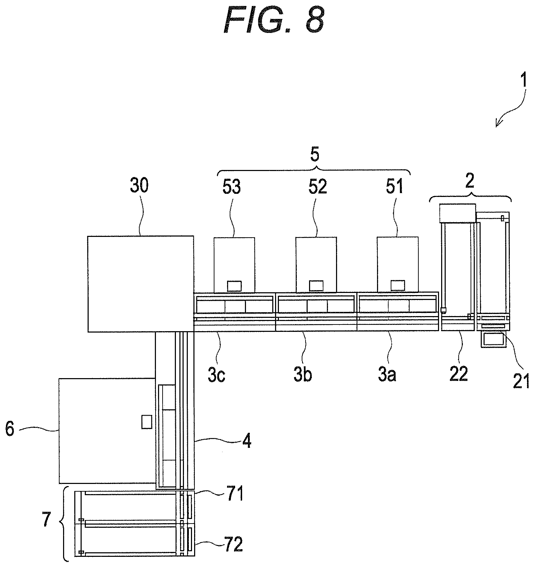

In the sample processing system having the above configuration, each configuring element, that is, the rack accommodating unit 21, the barcode reading unit 22, the sample transport units 3a, 3b, 3c, 4, the measurement units 51, 52, 53, the smear preparing device 6, and the rack accommodating unit 71, 72 is separable and connectable, and the arrangement different from the arrangement shown in Fig. 1 may be adopted. Fig. 8 is a plan view showing another arrangement example of the sample processing system. In the example shown in Fig. 8, a relay unit 30 for turning the transport direction of the sample rack L 90° is arranged between the sample transport unit 3c and the sample transport unit 4, and the arrangement of other units is the same as Fig. 1. Therefore, in the sample processing system 1 according to the present embodiment, the user can freely determine the arrangement of each unit according to the configuration of the installing facility.

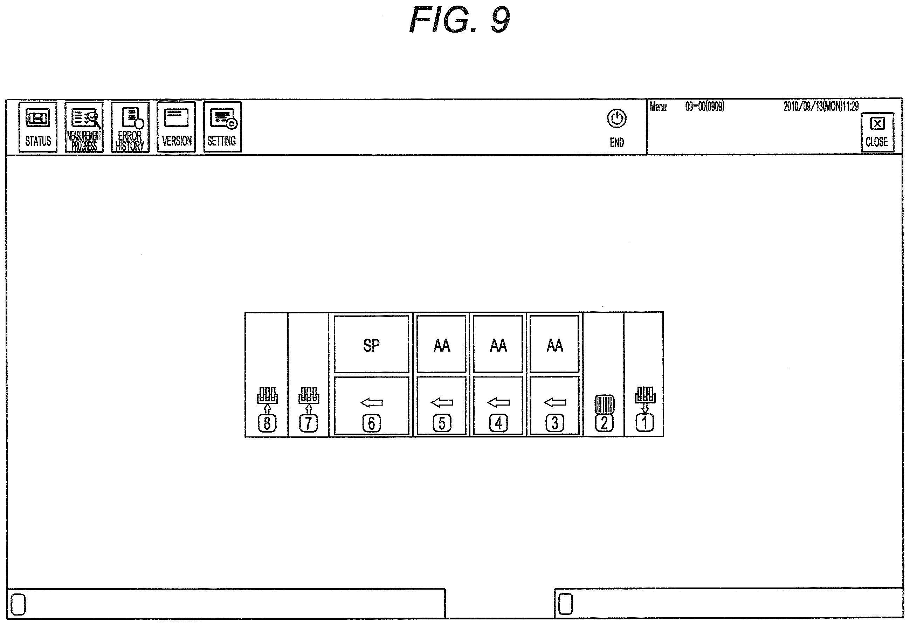

The system control device 8 stores the arrangement of each unit of the sample processing system in the hard disc 81d. The information indicating the arrangement of the sample processing system 1 is set by the service man or the user when introducing the sample processing system 1 into the facility. The system control device 8 can display the layout diagram showing the set arrangement of the sample processing system on the image display unit 82. Fig. 9 is a view showing a display example of the layout diagram of the sample processing system. In the example shown in Fig. 9, the layout diagram of when each unit of the sample processing system 1 is arranged as in Fig. 1 is shown. As shown in Fig. 9, in a layout screen D1, figures indicating each of the rack accommodating unit 21, the barcode reading unit 22, the sample transport units 3a, 3b, 3c, 4, the measurement units 51, 52, 53, the smear preparing device 6, and the rack accommodating unit 71, 72 of the sample processing system 1 are drawn in a positional relationship same as the positional relationship in which the units are actually arranged. The corresponding position number is displayed on the units for carrying out the transportation of the sample, that is, the rack accommodating unit 21, the barcode reading unit 22, the sample transport units 3a, 3b, 3c, 4, and the rack accommodating units 71, 72. That is, the position number "1" is displayed on the figure of the rack accommodating unit 21, the position number "2" is displayed on the figure of the barcode reading unit 22, the position number "3" is displayed on the figure of the sample transport unit 3a, the position number "4" is displayed on the figure of the sample transport unit 3b, the position number "5" is displayed on the figure of the sample transport unit 3c, the position number "6" is displayed on the figure of the sample transport unit 4, the position number "7" is displayed on the figure of the rack accommodating unit 71, and the position number "8" is displayed on the figure of the rack accommodating unit 72. The position numbers "1" to "8" indicate the order in which the sample rack L is transported in the transport path. The position numbers are stored in correspondence with the device ID (information specifying the unit such as serial number) of each unit in the hard disc 81d of the system control device 8. That is, the device ID and the position number "1" of the rack accommodating unit 21 are stored in correspondence to each other, and the device ID and the position number "2" of the barcode reading unit 22 are stored in correspondence to each other. In the layout diagram, the model name "AA" of the blood cell analyzer 5 is displayed on the figures of the measurement units 51, 52, 53, and the model name "SP" of the smear preparing device 6 is displayed on the figure of the smear preparing device 6.

### [Operation of sample processing system]

The operation of the sample processing system according to the present embodiment will now be described.

### [Sample processing operation]

First, the sample processing operation in which the sample processing system 1 transports the sample, and carries out the processing (measurement or preparation of smear) of the sample will be described.

### <Measurement order acquiring process>

The operator mounts the sample rack L accommodating the sample container T in the rack accommodating unit 21, operates the operation panel of the rack accommodating unit 21, and gives an instruction to start the processing to the sample processing system 1. The control unit of the sample sending device 2 receives such instruction to start the processing, and accordingly starts to transfer the sample rack L. The sample rack L mounted on the rack accommodating unit 21 is transferred to the back side on the rack accommodating unit 21, and thereafter, the sample rack L is transferred to the left direction and provided to the barcode reading unit 22.

The sample rack L introduced to the barcode reading unit 22 is transferred in the left direction on the transport path. The rack barcode of the sample rack L and the sample barcode of the sample container T are read by the barcode reader. The information indicating the read rack ID, the sample ID and the current position of the rack, that is, the ID information including the position information indicating the barcode reading unit 22 is transmitted to the system control device 8.

When the reading of the sample barcode by the barcode reading unit 22 fails, the information (barcode reading error information) indicating the barcode reading error is added to the ID information in place of the sample ID, and such ID information is transmitted to the system control device 8.

The sample rack L is then transferred on the barcode reading unit 22, to reach the rack sending position 223. Thereafter, the rack ID is read from the rack barcode of the sample rack L by the barcode reader 222a. The sample sending device 2 transmits the carry-out request data including the rack ID to the system control device 8, and waits for the carry-out instruction data transmitted from the system control device 8. When receiving the carry-out instruction data from the system control device 8, the sample sending device 2 carries out the sample rack L to the adjacent sample transporting device 3.

The measurement order acquiring process of the system control device 8 will now be described.

The system control device 8 receives the ID information from the sample sending device 2, and inquires the measurement order to the test information management device 9 with the sample ID contained in the ID information as the key. The measurement order is the data indicating the instruction of the analysis item in which analysis is to be carried out with respect to the sample, and includes attribute information of the sample such as sample ID, patient ID, and patient name, and information of the measurement item. The operation will be described in detail below.

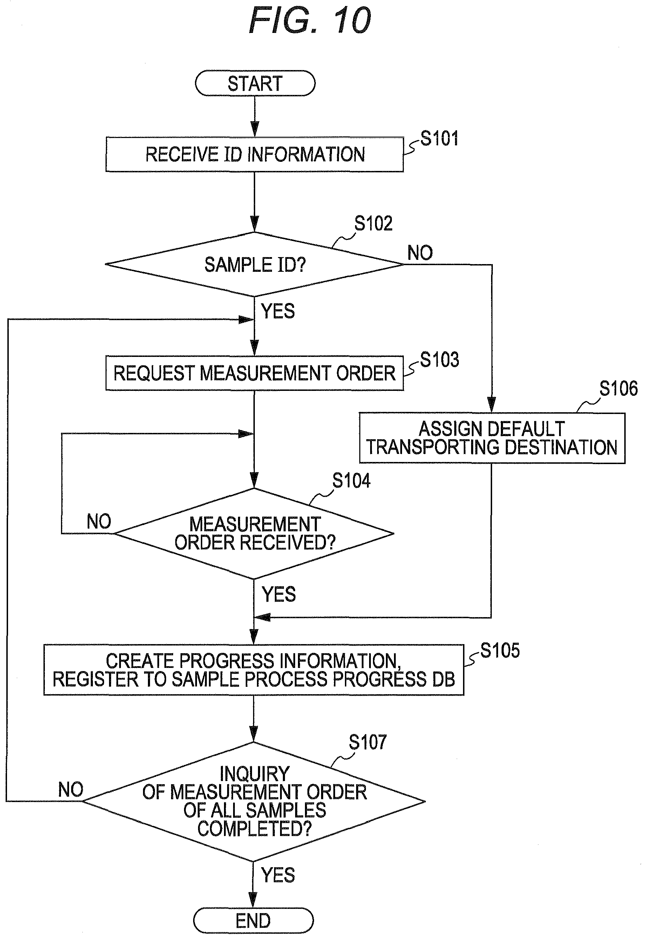

Fig. 10 is a flowchart showing the procedure of the measurement order acquiring process of the system control device 8. As described above, the sample sending device 2 transmits the sample ID and the rack ID read by the barcode reader, the holding position number indicating the holding position in the sample rack of each sample, and the ID information including the position information (unit ID of barcode reading unit 22) to the system control device 8 . Such ID information is received by the communication interface 81g of the system control device 8 (step S101). In the CPU 81a, the processing of step S102 is called out when an event of receiving the ID information occurs.

In step S102, the CPU 81a determines whether the information corresponding to one of the holding positions of the rack in the ID information is the sample ID or the barcode reading error information (step S102). If the information is the sample ID in step S102 (YES in step S102), the CPU 81a transmits the order request data including the sample ID to the test information management device 9, and requests the measurement order corresponding to the sample ID to the test information management device 9 (step S103) . The CPU 81a waits for the reception of the measurement order (NO in step S104), and when the measurement order transmitted from the test information management device 9 is received by the system control device 8 (YES in step S104), the CPU 81a creates the progress information of the sample processing based on the received measurement order, and stores the same in the sample process progress database DB (step S105).

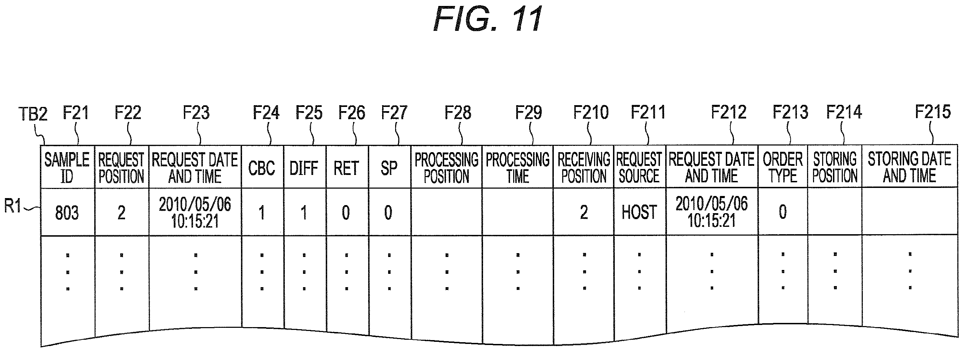

In the processing of step S105, the sample ID contained in the received measurement order, the rack ID contained in the received ID information, and the holding position number corresponding to the sample ID are stored in the sample information table TB1, the sample ID contained in the received measurement order, the request date and time information indicating the date and time the system control device 8 requested the measurement order to the test information management device 9, the presence or absence of specification of each measurement item in the received measurement order, the receiving position information indicating the position of the sample of when the measurement order is accepted, the transmission source of the measurement order, that is, the request source information indicating the request source of measurement, and the date and time at which the measurement order is received, that is, the request date and time information indicating the request date and time of measurement are stored in the progress situation table TB2. Fig. 11 is a schematic view showing an example of the progress situation table TB2 in which the progress information is registered. In the example of Fig. 11, the state of the progress situation table TB2 of when the measurement items CBC and the DIFF are specified and the measurement items RET and SP are not specified in the received measurement order is shown. As shown in the figure, in such a case, "1" is stored in each field F24, F25 of the progress situation table TB2, and "0" is stored in each field F26, F27. At this time point, the sample processing is not carried out on any measurement item, and hence no data is stored in each field F28, F29. Furthermore, the position number "2" is stored in the barcode reading unit 22 in the field F210 since the ID information received in step S101 includes the unit ID of the barcode reading unit 22 as the position information. Moreover, since the measurement order is transmitted from the test information management device 9, "HOST" indicating the test information management device or the transmission source is stored in the field F211, and the request date and time information "2010/05/06 10:15:21" is stored in the field F212. The type information "0" of the measurement order is stored in the field F213 since the measurement order is a normal measurement order. No data is stored in each field F214, F215 since the sample is not stored in the sample collecting device 7 at this time point.

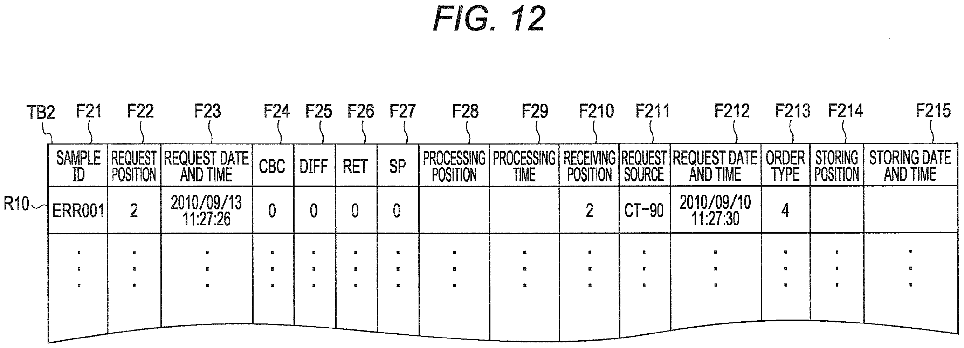

If the information corresponding to one of the holding positions of the rack in the ID information is the barcode reading error information in step S102 (NO in step S102), the CPU 81a assigns the default transporting destination (e.g., measurement unit 51) set in advance in the system control device 8 to the transporting destination of the rack (step S106), and proceeds the process to step S105. In this case, in the processing of step S105, the rack ID contained in the received ID information and the holding position number, and the sample ID assigned by the system control device 8 are stored in the sample information table TB1. The sample ID is the ID individually assigned to the sample in which the barcode reading error has occurred, and can be distinguished from the sample ID on the sample in which the barcode reading error has not occurred. In the progress situation table TB2, the sample ID is stored and the date and time information indicating the date and time at which the system control device 8 assigned the transporting destination to the rack is stored in place of the request date and time information. "0" is stored in the fields F24 to F27 since the measurement order is not received. Furthermore, in the progress situation table TB2, the information indicating the position of the sample of when the transporting destination is assigned with respect to the rack is stored as the receiving position information indicating the position of the sample of when the measurement order is received, the information indicating the "system control device 8" is stored as the request source information indicating the request source of the measurement, and moreover, the date and time information of when the transporting destination is assigned with respect to the rack is stored in the progress situation table TB2 as the request date and time information indicating the request date and time of the measurement. Fig. 12 is a schematic view showing an example of the progress situation table TB2 in which the progress information when the barcode reading error occurred is registered. For instance, as shown in Fig. 12, in this case, the sample ID "ERR001" in which identification can be made as the sample in which the barcode reading error occurred, is stored in the field F21. Furthermore, "0" is stored in the fields F24 to F27. At this time point, the sample processing is not carried out on any measurement item, and hence no data is stored in each field F28, F29. Furthermore, the position number "2" is stored in the barcode reading unit 22 in the field F210 since the ID information received in step S101 includes the unit ID of the barcode reading unit 22 as the position information. In this case, "CT-90" is stored as the request source information in the field F211, and "4" indicating "Default" is stored in the field F213. No data is stored in each field F214, F215 since the sample is not stored in the sample collecting device 7 at this time point.

The CPU 81a then determines whether or not the inquiry of the measurement order on all the samples accommodated in the sample ID corresponding to the rack ID, that is, the sample rack L of the rack ID (step S107), and returns the process to step S102 when the sample in which the inquiry of the measurement order is not made exists (NO in step S107), and requests the test information management device 9 for the measurement order corresponding to the sample in which the inquiry of the measurement order is not made.

If the inquiry of the measurement order is completed for all the samples (YES in step S107), the CPU 81a terminates the process.

### <Transport control process>

As described above, the sample sending device 2 transmits the carry out request data including the rack ID to the system control device 8 after the rack ID is read by the barcode reader 222a from the rack barcode of the sample rack L that reached the rack sending position 223. The system control device 8 receives the carry out request data from the sample sending device 2, determines the transporting destination of the sample rack L using the rack ID contained in the carry out request data, and instructs the carry out of the sample rack L to each device so as to transport to the determined transporting destination. The operation will be described in detail below.

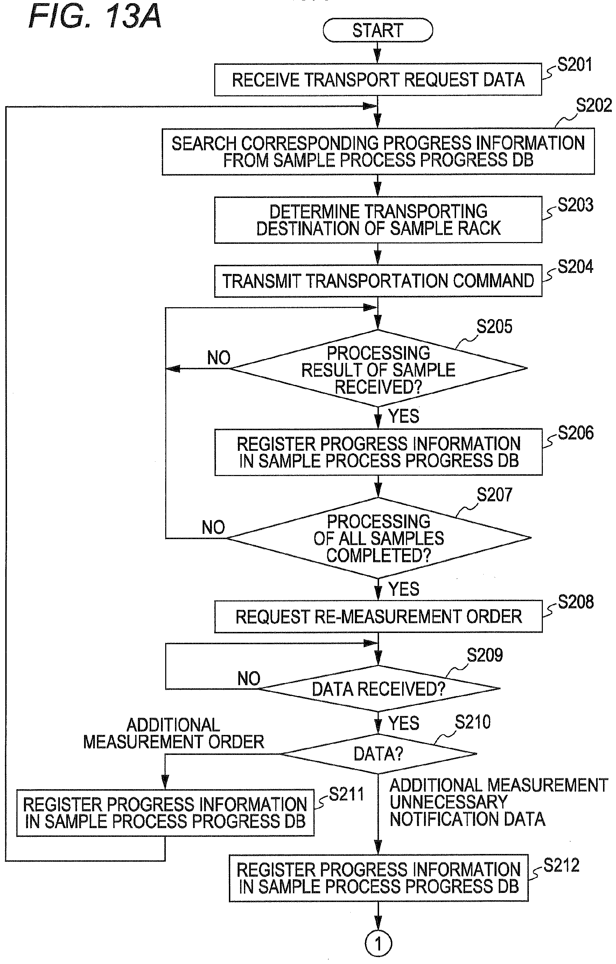

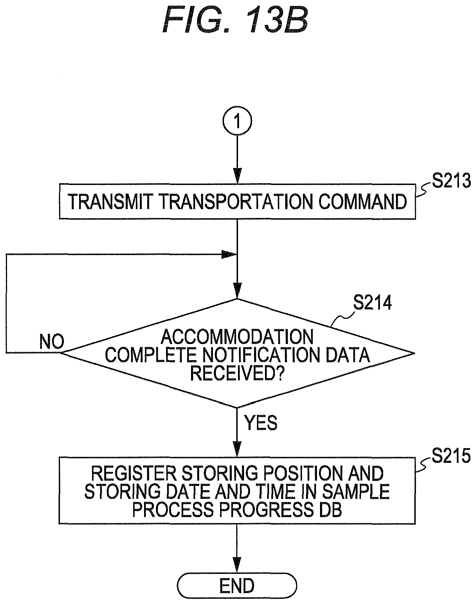

Fig. 13A and Fig. 13B are flowcharts showing the procedure of the transport control processing of the system control device 8. The carry out request data transmitted from the sample sending device 2 is received by the communication interface 81g of the system control device 8 (step S201). In the CPU 81a, the processing of step S202 is called out when an event of receiving the carry out request occurs.

In step S202, the CPU 81a searches for the progress information of the sample process progress database DB with the rack ID contained in the received carry out request data as the key (step S202). As described above, the progress information includes the state data of each measurement item (data indicating presence or absence of measurement order, presence or absence of processing result, presence or absence of cancellation of measurement order) . The CPU 81a determines the transporting destination of the sample rack L based on the state data of each measurement item in each searched progress information (step S203). In step S203, if the transporting destination of the sample rack L is already determined in the above-described step S106, such transporting destination is adopted.

The processing of step S203 will be described. If the measurement items CBC or DIFF is specified and the measurement items RET and SP are not specified in the measurement order of all the samples held in the sample rack L, the measurement of all the samples held in the sample rack L can be carried out in the measurement unit 51 or 52. Thus, in such a case, the measurement unit 51 or 52 is determined as the transporting destination. If one of CBC or DIFF and the SP are specified for the measurement items, and the RET is not specified, the measurement of the sample on the CBC and the DIFF is carried out in the measurement unit 51 or 52, and the preparation of the smear can be carried out in the smear preparing device. That is, in such a case, the sample rack L is transported to the measurement unit 51 or 52, and the measurement of the sample on the CBC and the DIFF is carried out, and thereafter, the sample rack L is transported to the smear preparing device 6 to prepare the smear. Thus, in such a case as well, the measurement unit 51 or 52 is determined as the transporting destination. If the measurement item RET is specified in the measurement order of one of the samples held in the sample rack L, the measurement unit 53 is determined as the transporting destination since only the measurement unit 53 can carry out the sample measurement on the RET.

The CPU 81a then transmits a transportation command so as to transport the sample rack L to the determined transporting destination (step S204). In this process, if the sample rack L exists on the barcode reading unit 22, and one of the measurement units 51, 52, 53 or the smear preparing device 6 is determined as the transporting destination, the CPU 81a transmits a command instructing the carry-out of the sample rack L to the sample transporting device 3 to the sample sending device 2, and transmits a command instructing the transportation of the sample rack L to the measurement units 51, 52, 53 or the smear preparing device 6 of the transporting destination to the sample transporting device 3. The sample sending device 2 and the sample transporting device 3 transport the sample rack L to the transporting destination according to the transportation command.

The operation of the blood cell analyzer 5 when the sample rack L is transported to the measurement unit 51 will be described below. After the sample rack L is transported to the measurement line 3M of the sample transport unit 3a, the sample container transporting portion 515 takes out the sample container T from the sample rack L, oscillates the sample container T and stirs the sample inside according to the control of the CPU of the information processing unit 54. The CPU of the information processing unit 54 controls the sample container transporting portion 515 to transport the sample container T to the barcode reading position 516a, reads the sample barcode of the sample container T with the barcode reader 516, and acquires the sample ID. The CPU also causes the communication interface (not shown) to transmit the order request data including the sample ID to the test information management device 9, and inquires the measurement order. Thereafter, the CPU waits for the reception of the measurement order, and stores the received measurement order in the hard disc (not shown) when the measurement order transmitted from the test information management device 9 is received by the communication interface of the information processing unit 54.

The CPU of the information processing unit 54 controls the sample container transporting portion 515 to transport the sample container T to the aspirating position, and controls the sample aspirating portion 511 to aspirate the sample of an amount necessary for the measurement item contained in the stored measurement order from the sample container T. After the aspiration of the sample is completed, the CPU controls the sample container transporting portion 515 to return the sample container T to the sample rack L.

The CPU of the information processing unit 54 controls the specimen preparing portion 512, prepares the measurement specimen according to the measurement item, supplies the measurement specimen to the detecting portion 513, and carries out the measurement of the sample by means of the detecting portion 513. The CPU thereby acquires the measurement data output from the detecting portion 513. The CPU executes the analysis processing of the measurement data, categorizes the blood cell contained in the sample, and counts the number of blood cells for every type and creates a scattergram in which the blood cell categorized as above is color-coded for every type. The measurement result data generated by the analysis processing of the measurement data is stored in the hard disc with the patient information and the like contained in the measurement order, and transmitted to the system control device 8 and the test information management device 9. The blood cell analyzer 5 sequentially executes the sample measurement operation on each sample held in the sample rack L.

The CPU of the information processing unit 54 determines whether or not an additional measurement for the relevant sample is necessary based on the measurement result generated in the above manner, and determines the measurement item, which is the target of additional measurement, when necessary. The additional measurement includes three types "Rerun", "Reflex", and "Repeat". The "Rerun" is the operation of carrying out the measurement of the same sample on the measurement item same as the measurement item in the sample measurement of the initial time when adapted to the rerun measurement condition defined by the user such as when the result of the sample measurement of the initial time is not a normal value, and "Repeat" is the operation of carrying out the sample measurement on the same measurement item in the same measurement unit 51 (52, 53) when error occurred in the relevant measurement unit 51 (52, 53). In the "Rerun", only the measurement unit in which error occurred (i.e., measurement unit that executed the measurement operation of the initial time) is the target of executing the additional measurement, whereas in the "Rerun", not only the measurement unit that carried out the measurement of the initial time but also the measurement unit that has not carried out the measurement of the initial time is the target of executing the additional measurement. The "Reflex" is the operation of carrying out the sample measurement on the measurement item including the measurement item different from the measurement item in the sample measurement of the initial time when adapted to the reflex measurement condition defined by the user such as when the result of a specific measurement item falls within a specific range. When the measurement result of the RBC item falls in an abnormal range defined in advance in the sample in which the measurement for CBC and DIFF is carried out, the CPU of the information processing unit 54 selects "Rerun", generates the measurement order including the CBC (referred to as "additional measurement order), and stores the same in the hard disc. The additional measurement order includes the type information indicating that the type of additional measurement is "Rerun". When the sample aspiration error occurs and the measurement is cancelled when carrying out the measurement for the CBC, the "Repeat" is selected, and the CPU of the information processing unit 54 generates the additional measurement order including the CBC and stores the same in the hard disc. In this case, the additional measurement order includes the type information indicating "Repeat" for the type of additional measurement. Furthermore, if the measurement result of the WBC item is deviated from the reference defined in advance in the sample in which the measurement for the CBC and the DIFF is carried out, the "Reflex" is selected and the RET is determined for the additional measurement item. When the additional measurement item is determined in such manner, the CPU generates the additional measurement order including the additional measurement item, and stores the same in the hard disc. In this case, the additional measurement order includes the type information indicating "Reflex" for the type of additional measurement. The additional measurement order generated in such manner is transmitted with the measurement result when transmitting the measurement result to the system control device 8.

When the sample aspiration error, or the measurement error such as out-of remaining reagent occurs and the sample measurement is cancelled, the measurement result information indicating that the measurement is cancelled by the measurement error is generated by the information processing unit 54 and transmitted to the system control device 8. In this case as well, the additional measurement order may be transmitted to the system control device 8 along with the measurement result.

The measurement order of the test information management device 9 is sometimes changed after the system control device 8 inquires the test information management device 9 about the measurement order. In the sample information management device 9, if the measurement order in which the measurement items CBC, DIFF and the SP are registered for a certain sample, the measurement order received from the test information management device 9 by the system control device 8 has the measurement items CBC, DIFF, and SP specified for such relevant sample. When the transporting destination of the sample is determined by the measurement unit 52, and the sample container T accommodating the sample is taken in by the measurement unit 52, the sample ID is read from the sample barcode of the sample container T by the barcode reader 516, and the measurement order of the relevant sample is again inquired by the information processing unit 54. If the change of deleting the "SP" from the measurement item of the measurement order is carried out before the inquiry of the measurement order by the information processing unit 54, the measurement items specified in the measurement order received by the information processing unit 54 are "CBC" and "DIFF". The measurement unit 51 executes the measurement of the sample for the measurement items for the measurement items "CBC" and "DIFF" according to the measurement order, where the measurement result of the sample for the measurement items "CBC" and "DIFF" is transmitted to the system control device 8 by the information processing unit 54. The information processing unit 54 transmits data (hereinafter referred to as "change notification data") of notifying the change in content of the measurement order along with the relevant measurement result to the system control device 8.

The case in which the measurement units 52, 53 are the transporting destination is similar to above, and thus the description will be omitted.

The operation of the smear preparing device 6 when the sample rack L is transported to the smear preparing device 6 will now be described. After the sample rack L is transported to the measurement line 3M of the sample transport unit 4, the sample ID is read from the barcode of the sample container T held by the sample rack L by the barcode reader (not shown) arranged in the sample transport unit 4. The sample ID is transmitted from the sample transport unit 4 to the smear preparing device 6, and the smear preparing device 6 transmits the order request data including the sample ID to the test information management device 9 to inquire the measurement order. Thereafter, the control unit 65 of the smear preparing device 6 waits for the reception of the measurement order, and the control unit 65 stores the received measurement order when the measurement order transmitted from the test information management device 9 is received by the smear preparing device 6.

If the measurement order includes the measurement item "SP", the control unit 65 of the smear preparing device 6 causes the sample dispensing unit 61 to aspirate the sample from the sample container T and drop the aspirated blood sample on the slide glass. The control unit 65 then controls the smearing unit 62 to smear and dry the blood sample dropped on the slide glass, and further print out on the slide glass. The control unit 65 controls the slide glass transporting unit 63 and the staining unit 64 to transport the slide glass smeared with the blood sample by the smearing unit 62 to the staining position, cause the staining unit 64 to supply the stain fluid with respect to the slide glass and prepare the smear.

The control unit 65 acquires the result of preparing the smear in the above manner, that is, the result of smearing the blood sample on the slide glass, and the result of staining the sample (hereinafter referred to as "smear preparing result"), and transmits the smear preparing result to the system control device 8 and the test information management device 9. The smear preparing device 6 sequentially executes the relevant smear preparing operation on the sample in which the measurement order includes the item "SP" of the sample held in the sample rack L.

The processing result transmitted in the above manner, that is, the measurement result transmitted from the blood cell analyzer 5 or the smear preparing result transmitted from the smear preparing device 6 is received by the system control device 8 and the test information management device 9. When receiving the processing result, the test information management device 9 determines whether or not the additional measurement on the relevant sample is necessary based on the received processing result, and determines the measurement item to carry out the additional measurement if necessary. Similar to the information processing unit 54 described above, the additional measurement includes three types "Rerun", "Reflex", and "Repeat". For instance, if the measurement result of a predetermined item is deviated from the reference defined in advance in the sample in which the measurement for the CBC and the DIFF is carried out, "Reflex" is selected and the RET or the SP is determined as the additional measurement item. When the additional measurement item is determined in such manner, the test information management device 9 generates the measurement order including the additional measurement item, and stores the same in the hard disc. In this case, the additional measurement order includes the type information indicating "Reflex" for the type of additional measurement.

The CPU 81a of the system control device 8 determines whether or not the processing result is received (step S205), and repeats the processing of step S205 until receiving the processing result if the processing result is not received (NO in step S205). The CPU 81a registers the progress information in the sample process progress database DB based on the processing result if the processing result is received in step S205 (YES in step S205), or based on the processing result and the additional measurement order of the change notification data if the additional measurement order of the change notification data is received with the processing result (step S206).

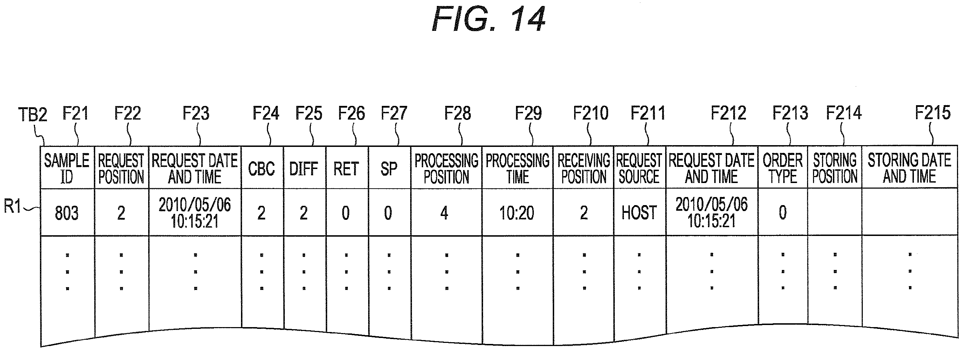

The processing of step S206 will be described in detail. Fig. 14 is a schematic view showing one example of the progress situation table TB2 in which the progress information is updated. In this example, a case where the sample measurement is carried out on the measurement items CBC and DIFF by the measurement unit 52 from the state shown in Fig. 11, and the measurement result is obtained is shown. Since the measurement result received by the system control device 8 includes the data for the CBC and the DIFF, the state data of the fields F24, F25 is updated from "1" to "2" in the record R1 of the progress situation table TB2 shown in Fig. 11. Furthermore, the position number "4" indicating the sample transport unit 3b connected to the measurement unit 52 is stored in the field F28 and the measurement time "10:20" is stored in the field F29.

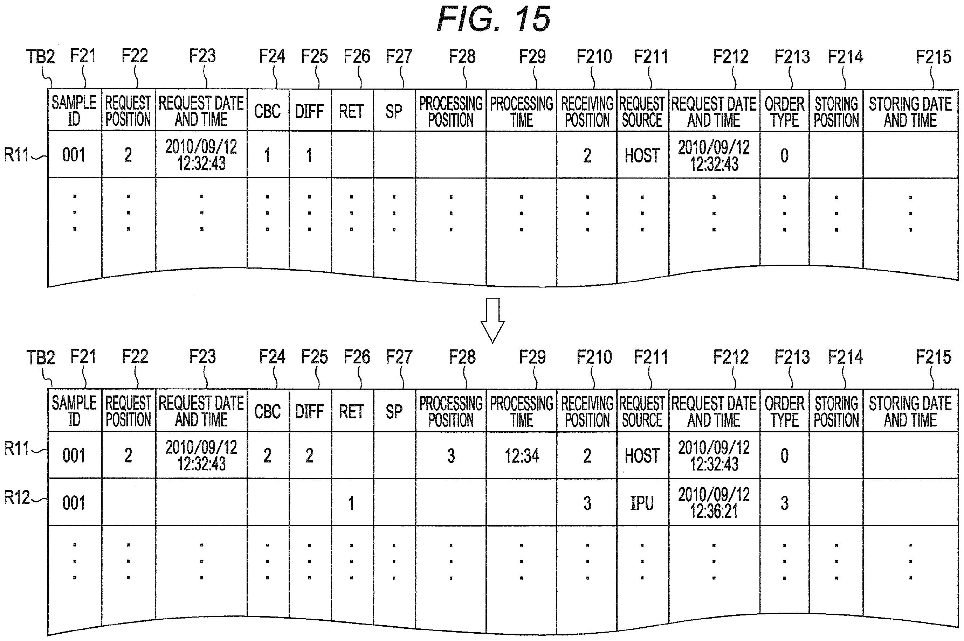

As described above, the system control device 8 sometimes receives the additional measurement order from the information processing unit 54 with the measurement result. In this case, the system control device 8 registers the data in the sample process progress database DB based on the measurement result and the additional measurement order. Fig. 15 is a schematic view describing the update of the progress situation table TB2 of when the additional measurement order is generated by the blood cell analyzer 5. Here, a case in which the measurement order in which the measurement items CBC and DIFF are specified is registered for a certain sample in the test information management device 9, and the additional measurement order instructing the additional measurement of "Reflex" of the sample is issued for the measurement item RET by the information processing unit 54 as a result of the measurement unit 52 carrying out the sample measurement for the measurement items CBC and DIFF will be described. First, the system control device 8 that received the measurement order for the sample from the test information management device 9 creates a new record R11 in the progress situation table TB2, stores the state data "1" in the fields F24, F25, stores the position number "2" of the barcode reading unit 22 in the field F210, stores the "HOST" indicating the test information management device or the transmission source in the field F211, and stores the request date and time information "2010/09/12 12:32:43" in the field F212.
After the relevant sample is transported to the measurement unit 52, the measurement result and the additional measurement order of the relevant sample are transmitted from the information processing unit 54. This measurement result includes the measurement data of the measurement items CBC and DIFF, and the additional measurement order is specified with the type Reflex of measurement order and the measurement item RET. The system control device 8 that received the relevant measurement result and the additional measurement order changes the state data of the fields F24, F25 from "1" to "2", stores the position number "3" indicating the sample transport unit 3a connected to the measurement unit 52 in the field F28, and stores the measurement time "12:34" in the field F29 in the record R11 of the progress situation table TB2. The system control device 8 also creates a new record R12 corresponding to the received additional measurement order, stores the state data "1" in the field F26, stores the position number "3" of the sample transport unit 3a or the receiving position information in the field F210, stores "IPU" indicating the information processing unit 54 or the transmission source in the field F211, stores the request date and time information "2010/09/12 12:36:21" in the field F212, and stores the type information "3" of the measurement order in the field F213.

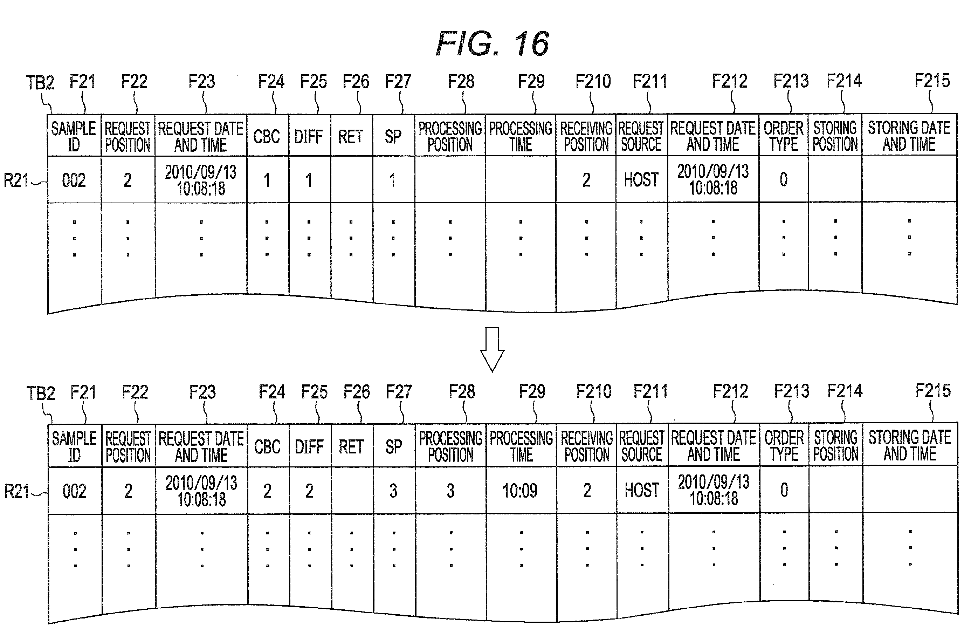

As described above, when the system control device 8 receives the change notification data with the measurement result from the information processing unit 54, the data is registered in the sample process progress database DB based on the measurement result and the change notification data. Fig. 16 is a schematic view describing the update of the progress situation table TB2 of when the measurement order is changed. A case where the measurement order in which the measurement items CBC, DIFF, and SP are specified is registered for a certain sample, and notification is made that the change such as SP is deleted from the measurement order is carried out by the change notification data in the test information management device 9 will be described. First, the system control device 8 that received the measurement order for the sample from the test information management device 9 creates a new record R21 in the progress situation table TB2, stores the state data "1" in the fields F24, F25, F27, stores the position number "2" of the barcode reading unit 22 in the field F210, stores the "HOST" indicating the test information management device or the transmission source in the field F211, and stores the request date and time information "2010/09/13 10:08:18" in the field F212. Since such measurement order is a normal measurement order, the system control device 8 stores the type information "0" of the measurement order in the field F213. After the relevant sample is transported to the measurement unit 51, the measurement result and the change notification data of the relevant sample are transmitted from the information processing unit 54. This measurement result includes the measurement data of the measurement items CBC and DIFF, and the change notification data indicates that the change in which the measurement item SP is deleted from the measurement order is carried out. The system control device 8 that received the relevant measurement result and the change notification data changes the state data of the fields F24, F25 from "1" to "2", stores the position number "3" indicating the sample transport unit 3a connected to the measurement unit 51 in the field F28, and stores the measurement time "10:09" in the field F29 in the record R21 of the progress situation table TB2. The system control device 8 changes the state data of the field F27 from "1" to "3" to reflect the cancellation of the specification of the measurement item SP in the measurement order.

The CPU 81a of the system control device 8 determines whether or not the processing of all the samples to be processed in the measurement unit or the smear preparing device 6 of the transporting destination is completed of the samples held in the sample rack L (step S207), and returns the process to step S205 and waits for the reception of the processing result if there is a non-processed sample (NO in step S207) . After the process by the measurement units 51, 52, 53 or the smear preparing device 6 is completed on all the samples of the sample rack L, the sample transport units 3a, 3b, 3c, 4 transfer the sample rack from the measurement line 3M of the sample transport unit to the transport line 3F, and stop the sample rack L at the terminating end position of the transport line 3F. That is, the sample transport units 3a, 3b, 3c, 4 wait for the carry-out of the sample rack L to the next unit until a transportation command is provided from the system control device 8.

If determined that the processing of all the samples is completed in step S207 (YES in step S207), the CPU 81a transmits the order request data including one of the sample IDs of the samples held in the sample rack L waiting to be carried out to the test information management device 9, and requests for the additional measurement order corresponding to the relevant sample ID to the test information management device 9 (step S208) . The test information management device 9 searches for the requested additional measurement order, and transmits the additional measurement order to the system control device 8 if the additional measurement order exists. If the additional measurement order does not exist, that is, if the additional measurement is not necessary on the sample, the test information management device 9 transmits additional measurement unnecessary notification data indicating that the additional measurement order does not exist to the system control device 8. The CPU 81a of the system control device 8 waits for the reception of the additional measurement order or the additional measurement unnecessary notification data (NO in step S209), and determines whether the received data is the additional measurement data or the additional measurement unnecessary notification data (step S210) if the data transmitted from the test information management device 9 is received by the system control device 8 (YES in step S209). If the system control device 8 receives the additional measurement order ("additional measurement order" in step S210), the CPU 81a creates the progress information of the sample process based on the received additional measurement order, and stores the same in the sample process progress database DB (step S211).

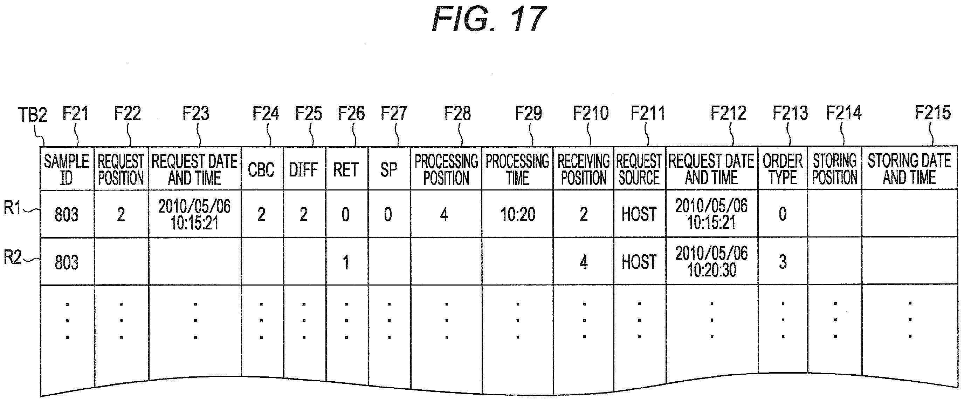

The processing of step S211 will now be described. Fig. 17 is a schematic view showing one example of the progress situation table TB2 in which the progress information is updated based on the additional measurement order. In this example, a case where the additional measurement order of "Reflex" in which the measurement item RET is specified by the test information management device 9 is generated from the state shown in Fig. 14, and the additional measurement order is received by the system control device 8 is shown. The system control device 8 that received the relevant additional measurement order creates a new record R2 corresponding to the received additional measurement order, stores the state data "1" in the field F26, stores the position number "4" of the sample transport unit 3b or the receiving position information in the field F210, stores "HOST" indicating the test information management device 9 or the transmission source in the field F211, stores the request date and time information "2010/05/06 10:20:30" in the field F212, and stores the type information "3" of the measurement order in the field F213.

After the processing of step S211 is completed, the CPU 81a returns the process to step S202, and searches for the progress information (records R1, R2 in the case shown in Fig. 17) of the sample process progress database DB with the rack ID of the sample rack L as the key (step S202). The CPU 81a also executes the processing of step S203, and determines the transporting destination of the sample rack L to carry out the processing of the sample for the non-performed measurement item. When the measurement of the sample is carried out by one of the measurement units 51 to 53, the sample rack L is stopped at the terminating end position of the transport line 3F of the sample transport unit corresponding to the measurement unit in which the measurement is carried out. That is, the transporting destination is determined before the sample rack reaches the branched point of the next sample transport unit. When the transporting destination is determined and the transportation command is transmitted from the system control device 8 to the sample transport units 3a, 3b, 3c, 4, the sample rack L is sent out to the sample transport unit of the post-stage, and the sample rack is transported from the branched point of the sample transport unit of the post-stage to the pre-measurement rack holder 33, or either the pre-processing holder 44 or the downstream side of the transport line 3F.

When the system control device 8 receives the additional measurement unnecessary notification data in step S210 ("additional measurement unnecessary notification data" in step S210), the CPU 81a creates the progress information of the sample process based on the received additional measurement unnecessary notification data, and stores the same in the sample process progress database DB (step S212). In this case, the system control device 8 stores "HOST" indicating the test information management device 9 or the transmission source of the additional measurement unnecessary notification data in the field F211 and the request date and time information in the field F212 of the progress situation table TB2 with respect to the position information of the sample rack L of when receiving the additional measurement unnecessary notification data.

The CPU 81a also transmits the transportation command specifying the sample collecting device 7 as the transporting destination of the sample rack L (step S213) . The sample rack L waiting at the terminating end position of the transport line 3F of one of the sample transport units 3a, 3b, 3c, 4 is transported along the transport line 3F of the sample transporting device 3 and accommodated in the sample collecting device 7. The control unit of the sample collecting device 7 transmits an accommodation complete notification data to the system control device 8 when accommodating the sample rack L. The CPU 81a of the system control device 8 determines whether or not the accommodation complete notification data is received (step S214), and waits until receiving the accommodation complete notification data (NO in step S214). When the system control device 8 receives the accommodation complete notification data (YES in step S214), the CPU 81a registers the storing position information and the storing date and time information in the sample process progress database DB (step S215), and terminates the process.

### <Progress situation displaying process>

The system control device 8 displays the progress situation of the sample process according to the progress information accumulated in the sample process progress database DB. The progress situation displaying process will be described below.

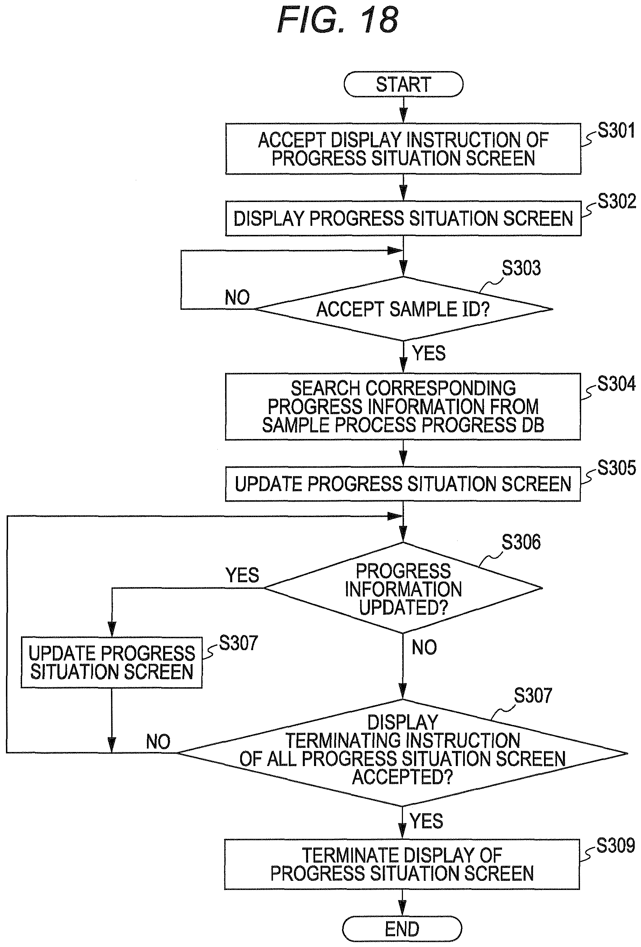

Fig. 18 is a flowchart showing the procedure of the progress situation displaying process. The user can operate the input unit 83 of the system control device 8 to give a display instruction of the progress situation screen of the sample process to the system control device 8. The CPU 81a accepts the input of the display instruction of the progress situation screen (step S301). When an event of accepting the display instruction of the progress situation screen occurs in the CPU 81a, the processing of step S302 is called out.

In step S302, the CPU 81a causes the image display unit 82 to display the progress information screen (step S302) . In the progress situation screen of this case, nothing is displayed in the region to display the progress information since the progress information to be displayed in not specified. In the progress situation screen, the input of the sample ID can be made, where the user inputs the sample ID to give the search instruction of the progress information of the sample corresponding to the sample ID to the system control device 8. When the CPU 81a waits for the input of the sample ID (NO in step S303) and accepts the input of the sample ID (YES in step S303), the progress information corresponding to the sample ID is searched from the sample process progress database DB (step S304).

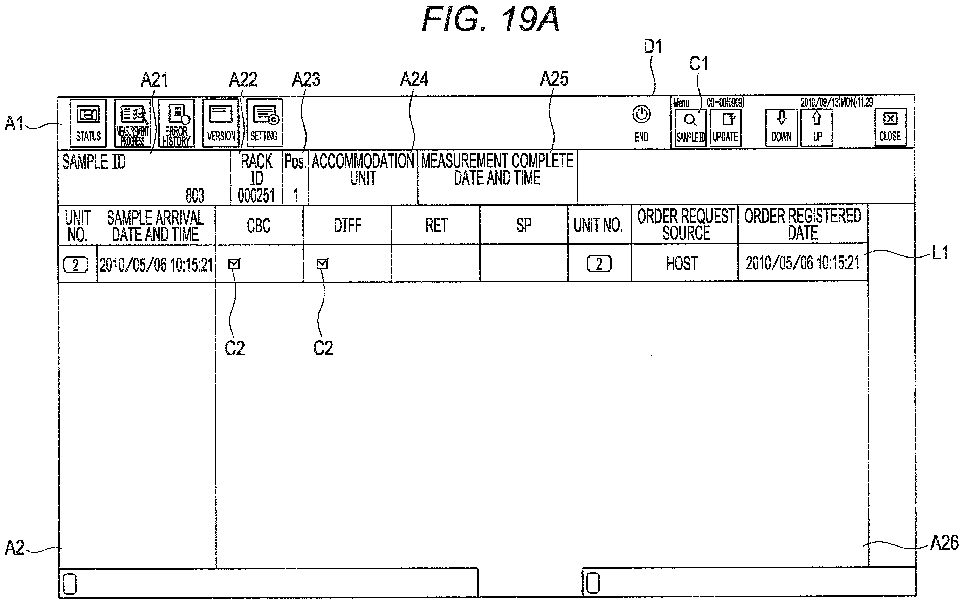

The CPU 81a then updates the progress situation screen so as to display the searched progress information (step S305) . Fig. 19A to Fig. 20F are schematic views showing an example of the progress situation screen. Fig. 19A shows the progress situation screen of when the progress information shown in Fig. 11 is stored in the sample process progress database DB. As shown in Fig. 19A, the progress situation screen D1 includes a tool bar region A1 in which a plurality of icons is displayed side by side, and an information display region A2 in which the progress information is displayed. The tool bar region A1 includes a search icon C1 for calling out the input box for inputting the sample ID. The user selects the search icon through the click operation of the mouse to display the input box of the sample ID. Other icons are also assigned with respective functions, where the icon group arranged on the left side of the tool bar is assigned with the function of switching the display to the corresponding screen when selected.

A region A21 for displaying the sample ID, a region A22 for displaying the rack ID, a region A23 for displaying the holding position of the sample in the sample rack L, a region A24 for displaying a storing position (storage unit) of the sample, and a region A25 for displaying the storing date and time are arranged at the upper part of the information display region A2. In the example shown in Fig. 19A, the regions A24, A25 are blank since the sample is not stored in the sample collecting device 7. A region A26 for displaying the progress situation of the processing of the sample in a list is arranged on the lower side of the regions A21 to A25. The region A26 is the region in which the progress situation of the sample process for the measurement order is displayed in a list for every measurement order acquired by the system control device 8 for the sample, where each item of the position (request position information) of the sample of when the request of the measurement order is made, the request date and time of the measurement order, the state (presence or absence of measurement order, processing position and processing time of sample, presence or absence of cancellation of measurement order, and presence or absence of occurrence of abnormality of measurement unit) of processing of each measurement item of CBC, DIFF, RET, SP, the position (receiving position information) of the sample of when the system control device 8 receives the measurement order, the transmission source of the measurement order (request source of measurement), the type of the measurement order, and the request date and time of the measurement order is displayed. In the example shown in Fig. 19A, a row L1 corresponding to the record R1 of the progress situation table tB2 shown in Fig. 11 is created, and each information stored in the record R1 is displayed in the row L1.

In the progress situation screen, the acquiring situation and the information of the presence or absence of the processing result of the measurement order (whether or not process is performed) is displayed with an icon. In the example of Fig. 19A, the measurement order (first test order) is already received by the system control device 8 for the measurement items CBC, DIFF, and the sample is non-measured, and thus an icon C2 indicating the state that the measurement order is received and non-processed is displayed in the columns of the measurement items CBC, DIFF. Since the measurement order is not received by the system control device 8 for the measurement items RET, SP, information "---" indicating that the measurement order does not exist is displayed in the columns of RET and SP.

The position number "2" is displayed in the receiving position information display column of the row L1, the "HOST" indicating the test information management device is displayed in the request source display column, and the request date and time information "2010/05/06 10:15:21" is displayed in the request date and time display column according to the record R1 of Fig. 11. According to such display, the user can easily grasp what state the sample is in on the sample processing step, that is, that the first test order in which the measurement items CBC and DIFF are specified exists in the sample, the processing (first test) of such sample is not carried out, the first test order is transmitted from the test information management device 9, the sample is positioned at the barcode reading unit 22 when the request date and time as well as the first test order are received by the system control device 8, and the received date and time.

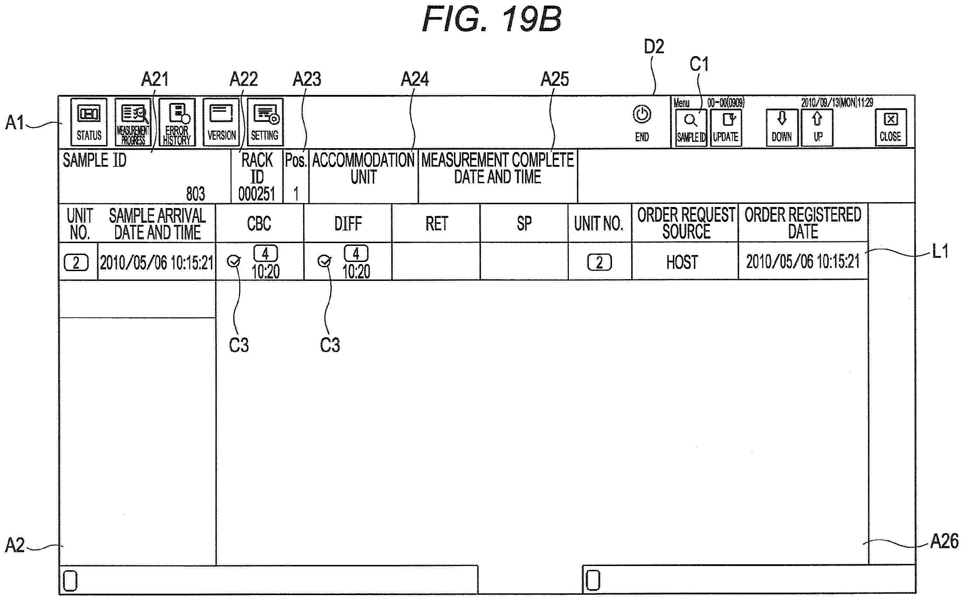

A case in which the sample processing step is progressed from the state shown in Fig. 19A will now be described. Fig. 19B shows the progress situation screen of when the progress information shown in Fig. 14 is stored in the sample process progress database DB. In this case, in the record R1 of the progress situation table TB2, the state data of the fields F24, F25 is "2", the position number "4" indicating the sample transport unit 3b connected to the measurement unit 52 is stored in the field F28, and the measurement time "10:20" is stored in the field F29. Therefore, in the progress situation screen D2 of this case, the icon C3 indicating that the sample is processed is displayed in the columns of the measurement items CBC and DIFF of the row L1, and the position number "4" and the measurement time "10:20" of the sample transport unit 3b are displayed as the position where the sample is processed. According to such display, the user can know what state the sample is in on the sample processing step and through what steps the sample passed to the relevant point. In other words, it can be easily grasped from the first test order in which the measurement items CBC and DIFF are specified in the relevant sample, that the measurement of CBC and DIFF is carried out, the sample measurement is carried out by the measurement unit 52, the measurement date and time, the first test order is transmitted from the test information management device 9, the request date and time, the sample is positioned at the barcode reading unit 22 when the request date and time as well as the first test order are received by the system control device 8, and the received date and time in the relevant sample.

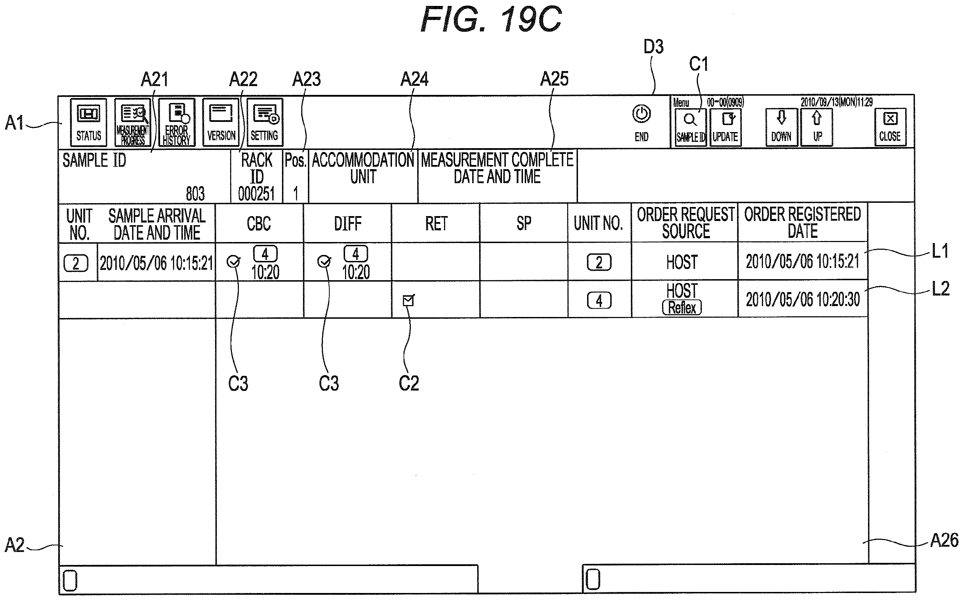

Fig. 19C shows the progress situation screen of when the progress information shown in Fig. 17 is stored in the sample process progress database DB. In this case, the record R2 is created in the progress situation table TB2. In the record R2, the state data "1" is stored in the field F26, the position number "4" of the sample transport unit 3b or the receiving position information of the additional measurement order is stored in the field F210, the "HOST" indicating the test information management device 9 or the transmission source of the additional measurement order is stored in the field F211, the request date and time information "2010/05/06 10:20:30" is stored in the field F212, and the type information "3" of the measurement order is stored in the field F213. Therefore, in the progress situation screen D2 of this case, the row L2 corresponding to the record R2 is displayed in addition to the row L1 shown in Fig. 19B. In the column of the measurement item RET of the row L2, the icon C2 indicating the state that the measurement order is received and non-processed is displayed, and the information "---" indicating that the measurement order does not exist is displayed in the columns of the measurement item SP. The position number "4" is displayed in the receiving position information display column of the row L2, the "HOST" indicating the test information management device is displayed in the request source display column, and the request date and time information "2010/05/06 10:20:30" is displayed in the request date and time display column according to the record R2 of Fig. 17. The "Reflex" indicating the type of measurement order is displayed with the "HOST" in the request source display column. According to such display, the user can know when and from where the measurement order, what measurement item is specified, is transmitted, and when the sample process is carried out for the first test order and the additional measurement order. That is, according to the display of row L2, the user can easily grasp that the additional measurement order in which the measurement item RET is specified in the sample exist, the additional measurement of such sample is not carried out, the additional measurement order is transmitted from the test information management device 9, the measurement of "Reflex" is requested by the additional measurement order, and the request date and time of the additional measurement order.

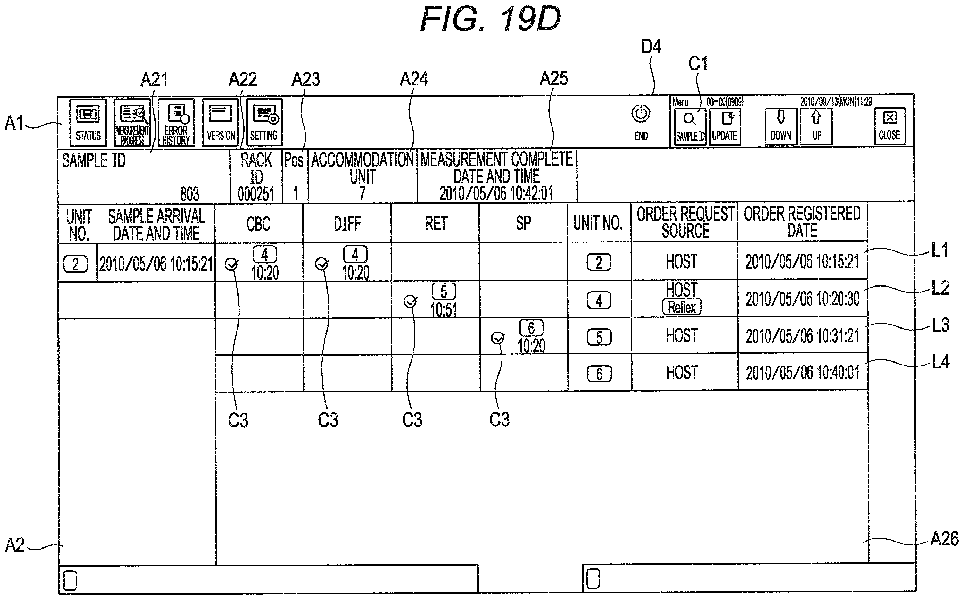

Fig. 19D shows the progress situation screen of when the sample processing is completed as a result of further progress of the sample processing step from the state shown in Fig. 19C. Four rows L1 to L4 are arranged in the progress situation screen D4. The row L1 is the same as that shown in Fig. 19C, and thus the description will be omitted. In the row L2, the icon C3 indicating that the sample is processed is displayed in the column of the measurement item RET, and the position number "5" of the sample transport unit 3c and the measurement time "10:31" are displayed as the position where the sample is processed. It can thus be grasped that the additional measurement is carried out for the measurement item RET, that the additional measurement is carried out by the measurement unit 53, and the additional measurement time.

In the row L3, the icon C3 is displayed in the column of the measurement item SP, and the position number "6" of the sample transport unit 4 and the measurement time "10:35" are displayed as the position where the sample is processed. In the row L3, the position number "5" is displayed in the receiving position information display column, the "HOST" indicating the test information management device is displayed in the request source display column, and the request date and time information "2010/05/06 10:31:21" is displayed in the request date and time display column. Therefore, it can be grasped that the second additional measurement order in which the measurement item SP is specified exists in the sample, the sample processing is completed for the measurement item SP, the sample processing is carried out by the position of the measurement unit 53, the sample processing time, the additional measurement order is received by the system control device 8 when the sample is positioned in the sample transport unit 3b, the additional measurement order is transmitted from the test information management device 9, and the request date and time of the additional measurement order.

In the row L4, "---" indicating that the measurement order does not exist is displayed in the columns of all the measurement items, and hence the additional measurement can be understood as unnecessary. In the row L3, the position number "6" is displayed in the receiving position information display column, the "HOST" indicating the test information management device is displayed in the request source display column, and the request date and time information "2010/05/06 10:40:01" is displayed in the request date and time display column. Therefore, it can be grasped that the additional measurement unnecessary notification data is received by the system control device 8 when the sample is positioned in the sample transport unit 4, the additional measurement unnecessary notification data is issued by the test information management device 9, and the received date and time.

Furthermore, in the progress situation screen D4, the position number "7" indicating the rack accommodating unit 71 is displayed as the storing position in the region A24, and the storing date and time "2010/05/06 10:42:01" is displayed in the region A25. Therefore, with respect to the relevant sample, it can be grasped that all the sample processing steps are already completed, it is stored in the rack accommodating unit 71, and the storing date and time.

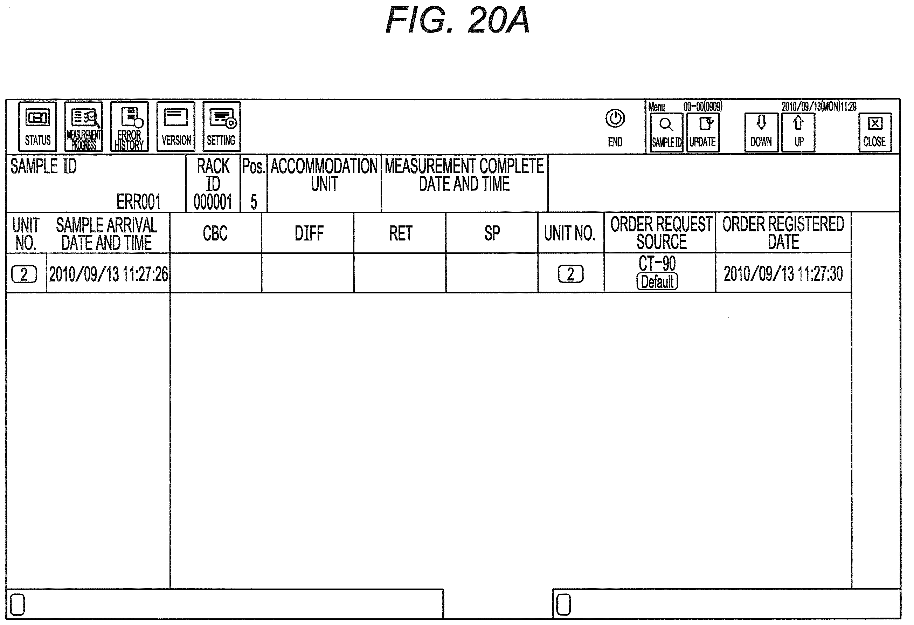

Fig. 20A to Fig. 20F show the transition of the progress situation screen with the progress of the sample processing step. In the example of Fig. 20A, the progress situation of the processing of the sample in which the reading of the sample barcode by the barcode reading unit 22 failed is displayed, and thus the sample ID "ERR001" from which distinction can be made that it is the sample related to the barcode reading error is displayed in the region A21. In this case, the correct sample ID is not acquired by the barcode reading error, and thus inquiry of the measurement order is not carried out. In other words, information "---" indicating that the measurement order does not exist is displayed in the columns of CBC, DIFF, RET, SP in the row L11 since the measurement order is not received by the system control device 8 for all the measurement items CBC, DIFF, RET, SP.

The position number "2" is displayed in the receiving position information display column of the row L11, and "CT-90" indicating the system control device is displayed in the request source display column according to the record R10 of Fig. 12. Furthermore, the type information "Default" indicating that the default transporting destination is determined is displayed in the request source display column of the row L11. Furthermore, the request date and time information "2010/09/13 11:27:30" is displayed in the request date and time display column of the row L11. According to such display, the user can easily grasp what state the sample is in on the sample processing step, that is, that the sample ID is not correctly acquired due to the barcode reading error in the sample and thus the measurement order does not exist for all the measurement items, the processing (first test) of such sample is not carried out, the transporting destination is determined by default setting of the system control device 8, the request date and time (in this case, date and time of when the transporting destination is assigned with respect to the sample rack), and sample is positioned in the barcode reading unit 22 when the transporting destination is assigned on the sample rack and the date and time.

A case in which the sample processing step progressed as below from the state shown in Fig. 20A will now be assumed. In other words, the sample rack L is transported to the measurement unit 51 or the default transporting destination from the state shown in Fig. 12. Thereafter, the sample container is retrieved into the interior of the measurement unit 51, and the sample barcode "1234-1236" is correctly read by the barcode reader 516 of the measurement unit 51. The sample ID is acquired in such manner, and the information processing unit 54 inquires the test information management device on the measurement order of the relevant sample with the sample ID as the key, and acquires the measurement order. The measurement order includes specification of the measurement items CBC and DIFF, and the sample measurement is carried out on the measurement items CBC and DIFF by the measurement unit 51, as a result. When the measurement unit 51 attempted the execution of the sample measurement according to the measurement order, the measurement error (sample aspiration error) occurred, the measurement of the sample is canceled, and the information on the cancellation of the measurement is transmitted from the information processing unit 54 to the system control device 8 as measurement result. The information processing unit 54 issues an additional measurement order of "Repeat" by the occurrence of the measurement error. The additional measurement order includes the specification of the measurement items CBC and DIFF. The additional measurement order is transmitted from the information processing unit 54 to the system control device 8 with the measurement result.

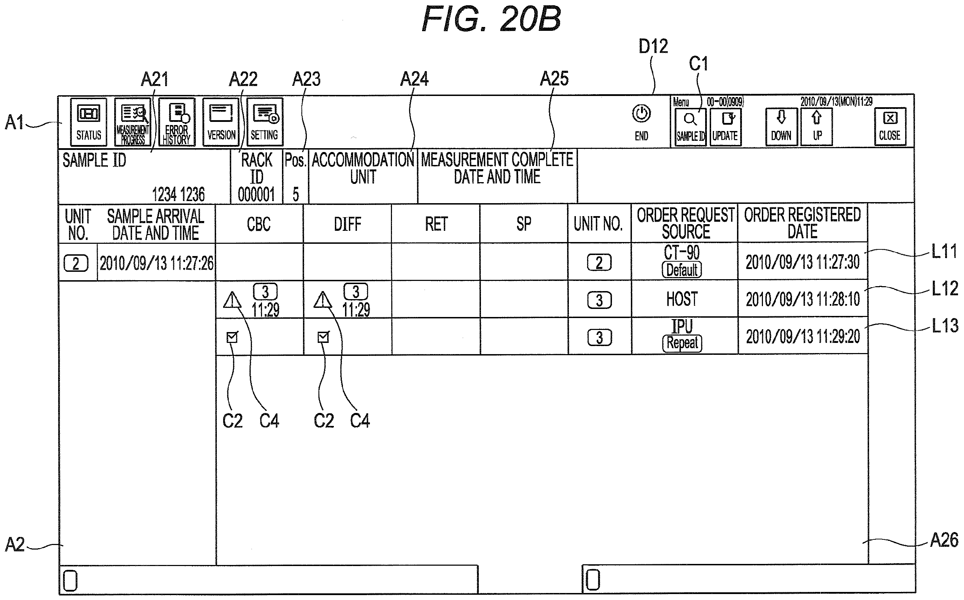

Fig. 20B shows the progress situation screen in the above case. In this case, the sample ID is correctly read by the barcode reader 516 of the measurement unit 51, and thus the sample ID in the progress situation screen is changed from "ERR001" to the correct sample ID "1234-1236". In this case, the measurement order used in the measurement is transmitted from the test information management device 8, and thus a new row L12 is added below the row L11 in the progress situation screen D12. The measurement result received by the system control device 8 contains the data of measurement cancellation by the measurement error of the CBC and the DIFF, and hence the state data of the fields F24, F25 is "4" in the progress situation table TB2 (not shown). In the progress situation screen, the information of the acquiring situation of the measurement order, the presence or absence of the processing result (whether or not process is performed), and the presence or absence of occurrence of the measurement error are displayed with icons. Thus, the icon C4 indicating the occurrence of the measurement error is displayed in the column of CBC and DIFF of the row L12. Since the measurement order is not specified for the measurement items RET, SP, information "---" indicating that the measurement order does not exist is displayed in the columns of RET and SP. Furthermore, the position number "3" and the measurement time (error occurrence time) "11:29" of the sample transport unit 3b are displayed as the position (position where measurement error occurred) where sample processing is executed in the columns of CBC and DIFF of the row L12. Since the measurement order is received by the system control device 8 with the measurement result, the sample is positioned in the sample transport unit 3a at the time point the system control device 8 received the measurement order. Therefore, the position number "3" is displayed in the receiving position information display column of the row L12. The relevant measurement order is transmitted from the test information management device 8, and thus "HOST" is displayed in the column of the request source of the row L12. According to such display, the user can know what state the sample is in on the sample processing step and through what steps the sample passed to the relevant point. In other words, it can be easily grasped that the acquisition of the sample ID failed by the barcode reading error in the barcode reading unit 22, the measurement of the CBC and the DIFF is carried out by the first test order in which the measurement items CBC and DIFF are specified, the sample measurement is carried out by the measurement unit 51, the measurement of the sample is cancelled by the measurement error, the measurement date and time, the first test order is transmitted from the test information management device 9, the request date and time, the sample is positioned in the sample transport unit 3a when the system control device 8 receives the first test order, and the received date and time in the relevant sample.

Since the additional measurement order is transmitted from the information processing unit 54 to the system control device 8 with the measurement result, the row L13 related to the additional measurement order is added under the row L12 of the progress situation screen D12. The CBC and the DIFF are specified in the additional measurement order, and thus the icon C2 indicating the state that the measurement order is received and non-processed is displayed in the columns of the measurement items CBC and DIFF of the row L13, and the information "---" indicating that the measurement order does not exist is displayed in the columns of the measurement items RET and SP. Furthermore, as the sample is positioned in the sample transport unit 3a when the system control device 8 receives the additional measurement order, the position number "3" is displayed in the receiving position information display column of the row L13, and the "IPU" indicating the information processing unit 54 is displayed in the request source display column. Furthermore, the type of the additional measurement order is "Repeat", and thus the type information "Repeat" of the measurement order is displayed with "IPU" in the request source display column of the row L13. Furthermore, the request date and time information "2010/09/13 11:29:20" is displayed in the request date and time display column of the row L13. According to such display, the user can know when and from where the measurement order, what measurement item is specified, is received, and when the sample process is carried out for the first test order and the additional measurement order. That is, according to the display of row L13, the user can easily grasp that the additional measurement order of "Repeat" in which the measurement items CBC and DIFF are specified exists in the sample, the additional measurement of the sample is not carried out, the additional measurement order is transmitted from the information processing unit 54, and the request date and time of the additional measurement order.

A case in which the sample processing step progressed as below from the state shown in Fig. 20B is assumed. In other words, the sample measurement is carried out for the measurement items CBC and DIFF by the measurement unit 51 based on the additional measurement order of "Repeat" from the state shown in Fig. 20B. The measurement of the sample is normally carried out, and the measurement result is transmitted to the system control device 8 and the test information management device 9. The information processing unit 54 issues the additional measurement order of "Reflex" on the basis of the measurement result based on the additional measurement order of "Repeat". The additional measurement order includes the specification of the measurement item RET. The additional measurement order of "Reflex" is transmitted from the information processing unit 54 to the system control device 8 with the measurement result based on the additional measurement order of "Repeat".

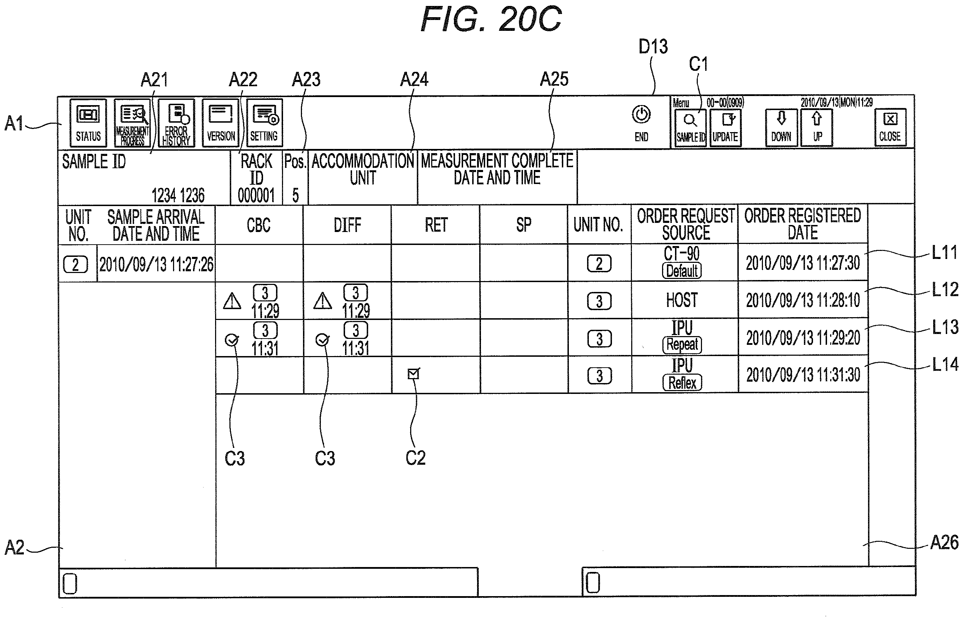

Fig. 20C shows the progress situation screen in the above case. In the progress situation screen D13 of this case, the icon C3 indicating that the sample is processed is displayed in the columns of the measurement items CBC and DIFF of the row L13, and the position number "3" and the measurement time "11:31" of the sample transport unit 3a are displayed as the position where the sample is processed. According to such display, the user can easily grasp from the additional measurement order of "Repeat" in which the measurement items CBC and DIFF are specified in the sample, that the measurement of CBC and DIFF is carried out, the sample measurement is carried out by the measurement unit 51, the measurement date and time, the additional measurement order is transmitted from the information processing unit 54, the request date and time, the sample is positioned in the sample transport unit 3a when the system control device 8 received the additional measurement order, and the received date and time.

Since the additional measurement order "Reflex" is transmitted from the information processing unit 54 to the system control device 8 with the measurement result, the row L14 related to the additional measurement order is added under the row L13 of the progress situation screen D13. The RET is specified in the additional measurement order, and thus the icon C2 indicating the state that the measurement order is received and non-processed is displayed in the columns of the measurement item RET of the row L14, and the information "---" indicating that the measurement order does not exist is displayed in the columns of the measurement items CBC, DIFF, and SP. Furthermore, as the sample is positioned in the sample transport unit 3a when the system control device 8 receives the additional measurement order, the position number "3" is displayed in the receiving position information display column of the row L14, and the "IPU" indicating the information processing unit 54 is displayed in the request source display column. Furthermore, the type of the additional measurement order is "Reflex", and thus the type information "Reflex" of the measurement order is displayed with "IPU" in the request source display column of the row L14. Furthermore, the request date and time information "2010/09/13 11:31:30" is displayed in the request date and time display column of the row L14. According to the display of row L14, the user can easily grasp that the additional measurement order of "Reflex" in which the measurement item RET is specified exists in the sample, the additional measurement of the sample is not carried out, the additional measurement order is transmitted from the information processing unit 54, and the request date and time of the additional measurement order.

A case in which the sample processing step progressed as below from the state shown in Fig. 20C is assumed. In other words, from the state shown in Fig. 20C, the system control device 8 determines the transporting destination of the sample rack L to the measurement unit 53 based on the additional measurement order "Reflex", and the sample measurement is carried out for the measurement item RET by the measurement unit 53. The measurement of the sample is normally carried out, and the measurement result is transmitted to the system control device 8 and the test information management device 9.

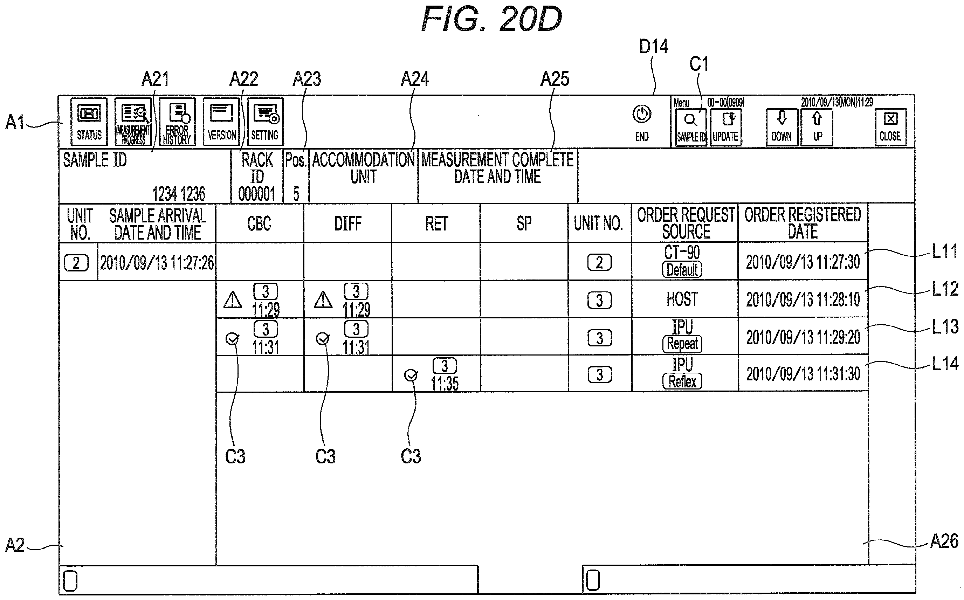

Fig. 20D shows the progress situation screen in the above case. In the progress situation screen D14 of this case, the icon C3 indicating that the sample is processed is displayed in the column of the measurement item RET of the row L14, and the position number "5" and the measurement time "11:35" of the sample transport unit 3b are displayed as the position where the sample is processed. According to such display, the user can easily grasp from the additional measurement order "Reflex" in which the measurement item RET is specified in the sample, that the measurement of the RET is carried out, the sample measurement is carried out by the measurement unit 53, the measurement date and time, the additional measurement order is transmitted from the information processing unit 54, the request date and time, the sample is positioned in the sample transport unit 3a when the system control device 8 received the additional measurement order, and the received date and time.

A case in which the sample processing step progressed as below from the state shown in Fig. 20D is assumed. In other words, the test information management device 9 issues the additional measurement order in which the SP is specified based on the measurement result based on the additional measurement order of "Reflex" from the state shown in Fig. 20D. The sample rack L is stopped at the terminating position of the transportation line 3F of the sample transport unit 3c, and in the meantime, the system control device 8 inquires the additional measurement order to the test information management device 9, and the additional measurement order in which the processing item SP is specified is transmitted from the test information management device 9 to the system control device 8.

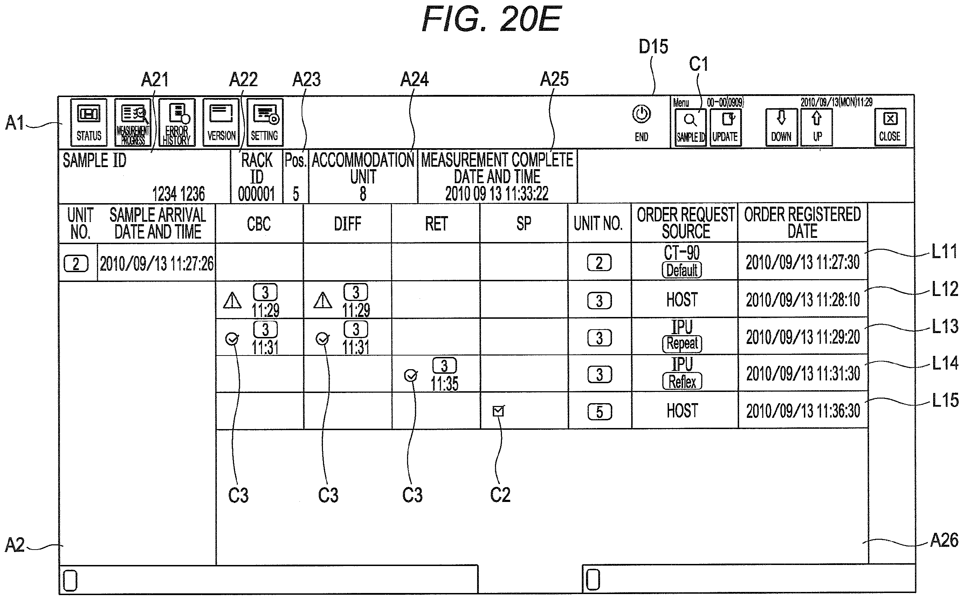

Fig. 20E shows the progress situation screen in the above case. In the progress situation screen D15 in this case, the additional measurement order in which the processing item SP is specified is transmitted from the test information management device 9 to the system control device 8, and thus the row L15 related to the additional measurement order is added under the row L14 of the progress situation screen D15. The SP is specified in the additional measurement order, and thus the icon C2 indicating the state that the measurement order is received and non-processed is displayed in the column of the processing item SP of the row L15, and the information "---" indicating that the measurement order does not exist is displayed in the columns of the measurement items CBC, DIFF, and RET. Furthermore, as the sample is positioned in the sample transport unit 3c when the system control device 8 receives the additional measurement order, the position number "5" is displayed in the receiving position information display column of the row L15, and the "HOST" indicating the test information management device 9 is displayed in the request source display column. Furthermore, the type of the additional measurement order is "normal", and thus only "HOST" is displayed in the request source display column of the row L15, and the type information of the measurement order is not displayed. Furthermore, the request date and time information "2010/09/13 11:36:30" is displayed in the request date and time display column of the row L15. According to the display of row L15, the user can easily grasp that the additional measurement order of "normal" in which the processing item SP is specified exists in the sample, the process related to SP of the sample is not carried out, the additional measurement order is transmitted from the test information management device 9, and the request date and time of the additional measurement order.

A case in which the sample processing step progressed as below from the state shown in Fig. 20E is assumed. In other words, from the state shown in Fig. 20E, the system control device 8 determines the transporting destination of the sample rack L to the smear preparing device 6 based on the additional measurement order in which the processing item SP is specified, and the preparation of the smear of the sample is carried out by the smear preparing device 6. The smear is normally prepared, and the processing result is transmitted from the smear preparing device 6 to the system control device 8 and the test information management device 9. The test information management device 9 generates the additional measurement unnecessary notification data based on the received processing result, and transmits the system control device 8. Thereafter, the sample is collected by the sample collecting device 7, and the sample processing is terminated.

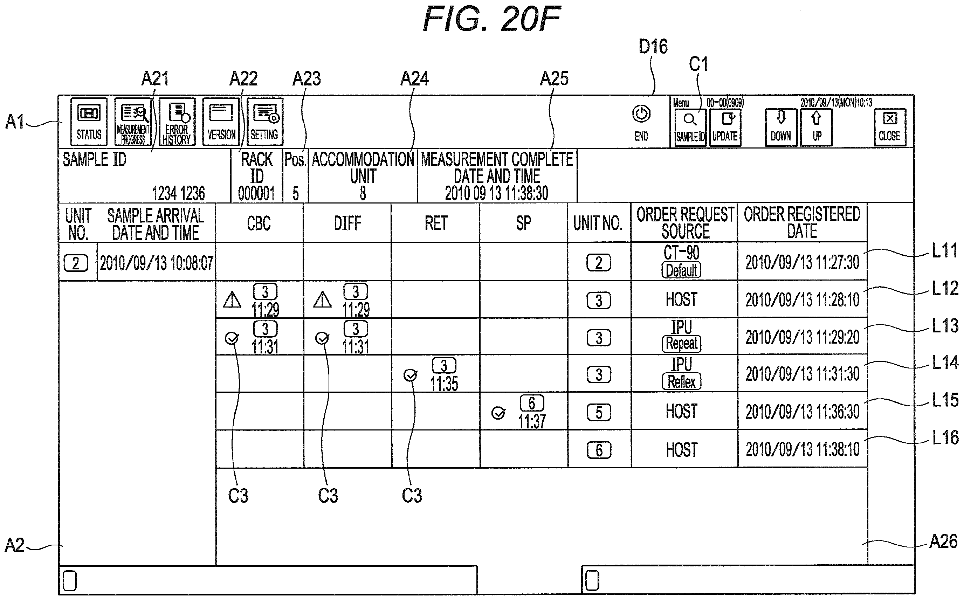

Fig. 20F shows the progress situation screen in the above case. In the progress situation screen D16 of this case, the icon C3 indicating that the sample is processed is displayed in the column of the processing item SP of the row L15, and the position number "6" and the measurement time "11:37" of the sample transport unit 4 are displayed as the position where the sample is processed. According to such display, the user can easily grasp from the additional measurement order in which the processing item SP is specified in the relevant sample, that the processing of SP is carried out, the sample processing is carried out by the smear preparing device 6, the processing date and time, the additional measurement order is transmitted from the test information management device 9, the request date and time, the sample is positioned in the sample transport unit 3c when the system control device 8 received the additional measurement order, and the received date and time.

The row L16 is added to under the row L15. In the row L16, the columns of all the measurement items are blank, which indicates that the measurement order does not exist, and hence the additional measurement can be understood as unnecessary. In the row L16, the position number "6" is displayed in the receiving position information display column, and the "HOST" indicating the test information management device is displayed in the request source display column. Therefore, it can be grasped that the additional measurement unnecessary notification data is received by the system control device 8 when the sample is positioned in the sample transport unit 4, and that the additional measurement unnecessary notification data is issued by the test information management device 9.

The CPU 81a then determines whether or not the progress information is updated in the sample process progress database DB, that is, whether or not the new data corresponding to the sample ID is registered (step S306), updates the progress situation screen according to the new progress information (step S307) if the progress information is updated (YES in step S306), and returns the process to step S306. As a result, if the progress information of the sample process progress database DB is updated from the state shown in Fig. 11 to the state shown in Fig. 14, the progress situation screen transitions from the state shown in Fig. 19A to the state shown in Fig. 19B.

If the progress information is not updated in step S306 (NO in step S306), the CPU 81a determines whether or not the display terminating instruction of the progress situation screen is received (step S308), and returns the process to step S306 if the display terminating instruction is not received (NO in step S308). If the display terminating instruction of the progress situation screen is received in step S308 (YES in step S308), the CPU 81a terminates the display of the progress situation screen (step S309) and terminates the process.

As described in detail above, in the sample processing system 1 according to the present embodiment, the progress situation screen is displayed by the system control device 8, and process progress information including the request source information of the measurement order is displayed for every measurement order received by the system control device 8, and thus the user can easily grasp where each measurement order is issued.

The information indicating the type of measurement order is displayed with the information of the request source of the measurement order in the process progress information, and thus the user can easily grasp the type of each measurement order.

### (Second embodiment)

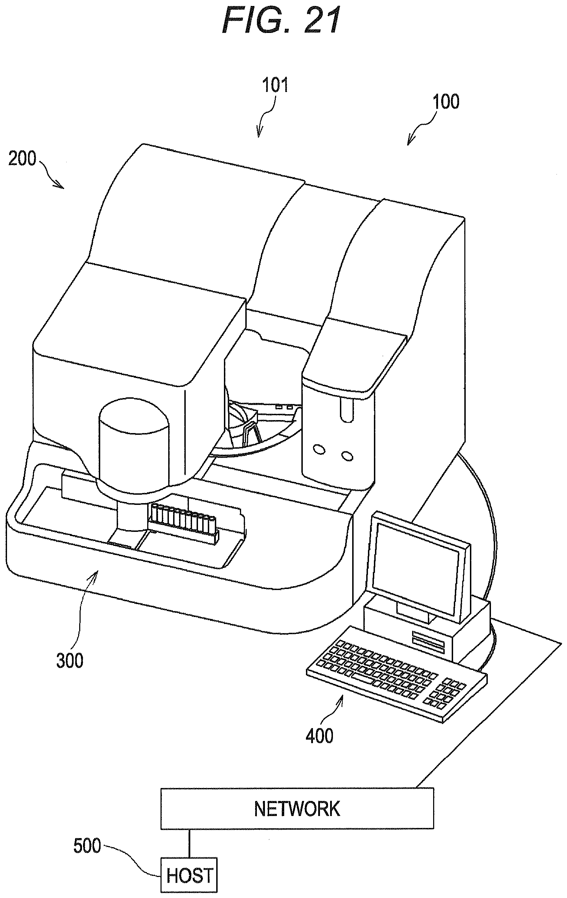

Fig. 21 is a schematic perspective view showing an overall configuration of a sample processing system according to a second embodiment.
The sample processing system 100 shown in Fig. 21 includes a sample measurement device 101 and a test information management device 500. The sample measurement device 101 is a device for analyzing the amount or degree of activity of a specific substance related to coagulation and fibrolytic function of the blood by optically measuring the same, and uses blood plasma for the sample (specimen). In the sample measurement device 100, the optical measurement of the sample is carried out for a plurality of measurement items using a coagulation time method, a synthetic substrate method, and immune nephelometry.

The sample measurement device 100 includes a measurement unit 200, and an information processing unit 400 communicably connected to the measurement unit 200. A sample transport unit 300 is arranged on the front surface side of the measurement unit 200. The information processing unit 400 is communicably connected to the test information management device 500 through a local area network (LAN).

The information processing unit 400 is configured by a computer. The configuration of the information processing unit 400 according to the present embodiment is substantially the same as the configuration of the information processing unit 54 according to the first embodiment, and thus the description thereof will be omitted. The information processing unit 400 can register measurement orders. The user specifies the sample number and the measurement item to register the measurement order by operating the information processing unit 400. The measurement order registered in such manner is stored in the hard disc (not shown) of the information processing unit 400. The measurement of the sample is carried out in the following manner when the information processing unit 400 controls the measurement unit 200 according to the relevant measurement order.

The measurement unit 200 according to the present embodiment has a primary sample dispensing unit for aspirating the sample from the sample container held in the sample rack transported by the sample transport unit 300 (not shown) . The sample aspirated by the primary sample dispensing unit is quantitatively dispensed (primary dispensing) to the cuvette arranged on the turn table arranged inside the sample measurement unit 300. Furthermore, some of the samples accommodated in the cuvette is aspirated by a secondary sample dispensing unit (not shown) arranged in the measurement unit 200, and is dispensed (secondary dispensing) to the cuvette arranged on the turn table separate from the relevant cuvette. The cuvette in which the sample is secondary dispensed is rotationally moved on the turn table while being warmed for a predetermined time, and a blood coagulation reagent corresponding to the measurement item is dispensed by a reagent dispensing unit (not shown) arranged in the measurement unit 200. The blood coagulation reagent and the sample are mixed in the cuvette, thus causing the blood coagulation reaction. The cuvette accommodating the mixture of the sample and the reagent is irradiated with light by an optical detection unit arranged inside the measurement unit 200, and the transmissive light is detected to carry out the measurement of the sample. The structure of the measurement unit 200 is similar to that described in Japanese Patent No. 3229498.

The measurement data obtained when the measurement unit 200 measures the sample in the above manner is transmitted to the information processing unit 400. The information processing unit 400 receives the measurement data and analyzes the measurement data to obtain the measurement result of the sample. The information processing unit 400 that generated the measurement result transmits the measurement result to the test information management device 500.

The test information management device 500 is configured by a computer. The configuration of the test information management device 500 according to the present embodiment is substantially similar to the configuration of the test information management device 9 according to the first embodiment, and thus the description thereof is omitted. The test information management device 500 analyzes the received measurement result, and determines whether or not the additional measurement is necessary. If determined that the additional measurement is necessary, the test information management device 500 issues the additional measurement order. The type of additional measurement order is "Reflex". When the additional measurement order is issued by the test information management device 500, the additional measurement order is transmitted from the test information management device 500 to the information processing unit 400. When receiving the additional measurement order, the information processing unit 400 controls the measurement unit 200 according to the additional measurement order. Thus, the sample is aspirated from the cuvette in which the sample to be subjected to the additional measurement is primary dispensed to the secondary sample dispensing unit by an amount necessary for the additional measurement, and secondary dispensed to a different cuvette to carry out the measurement of the sample similar to the above.

The information processing unit 400 has a function of displaying the progress situation of the sample measurement. The hard disc of the information processing unit 400 includes a sample process progress database (not shown), where information (progress information) such as the sample number, the presence or absence of the measurement order for each measurement item, the presence or absence of the measurement result, the presence or absence of the cancellation of the measurement order, the presence or absence of occurrence of the measurement error, the time the measurement is carried out, the issuing source (request source) of the measurement order, the type of measurement order, and the request date and time of the measurement order are stored in the relevant database. The information processing unit 400 stores the progress information in the sample process progress database and records the progress of sample measurement in the course of sample measurement. The information processing unit 400 can display a progress situation screen showing the progress situation of the sample measurement on the display device according to the progress information stored in the sample process progress database.

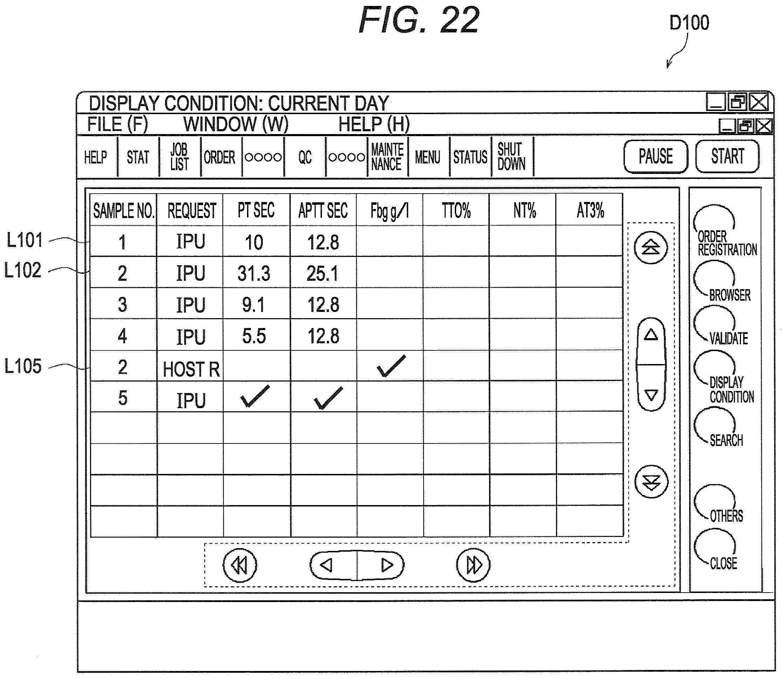

Fig. 22 is a schematic view showing an example of the progress situation screen of the information processing unit 400. As shown in Fig. 22, the progress situation screen D100 displays the progress situation of the sample measurement in the form of a list. One row of the progress situation screen D100 corresponds to one measurement order. Each row includes a plurality of regions for displaying the sample number, the request source of the measurement order, and each progress situation of the sample measurement for each measurement item such as PT, APTT, Fbg, TTO, NT, and AT3. In each region displaying the progress situation of the sample measurement for every measurement item, the check mark icon C100 is displayed if the measurement order exists but the measurement result is not obtained (i.e., non-measured or during measurement), the numerical value data of the measurement result is displayed if the sample measurement is completed, and nothing is displayed if the measurement order does not exist. For instance, in row L101, the measurement progress information related to the sample having the sample number "1", where it is shown that the request source of the measurement order is the information processing unit 400, and the measurement result exists, that is, the measurement is completed for the measurement items PT and APTT. In row L102, it is shown that the measurement order is issued from the information processing unit, and the measurement result of the measurement items PT and APTT is obtained based on the measurement order for the sample having the sample number "2".

In the display column of the request source of the measurement order of the progress situation screen D100, the type information indicating the type of measurement order is displayed in addition to the request source information. If the additional measurement order of "Reflex" is issued, "R" is displayed in addition to the request source information in the request source display column. In the example of Fig. 22, the measurement progress information of the additional measurement order of the sample having the sample number "2" is displayed in row L105, where the request source information "HOST" and the type information "R" of the measurement order are displayed in the request source display column of the row L105. Thus, it can be recognized that the additional measurement order of "Reflex" is issued from the test information management device 500 for the sample having the sample number "2". In row L105, the check mark icon C100 is displayed in the Fbg column. Therefore, it can be recognized that the measurement of the measurement item Fbg is instructed for the sample having the sample number "2" by the additional measurement order of "Reflex" and that the measurement result thereof is not yet obtained.

### (Other embodiments)

In the first embodiment described above, a case of carrying out the measurement of the sample by the measurement units 51 to 53 and preparing the smear of the sample by the smear preparing device 6 for the processing of the sample has been described, and in the second embodiment, a case of carrying out an optical measurement of the amount or degree of activity of a specific substance related to coagulation and fibrolytic function by the measurement unit 200 for the processing of the sample has been described, but these are not the sole cases. Other processing of the sample may be adopted such as immune analysis by the immune analyzer, biochemical analysis by the biochemical analyzer, and urine analysis by the urine analyzer.

In the first embodiment, "Manual" and "SP" can be displayed as the information indicating the request source in the request source display column of the progress situation screen. The measurement order of the manual measurement is issued when the manual measurement button arranged on the front surface of the housing of the measurement unit 51, 52, 53 is pushed, whereby the manual measurement is carried out. In this case, one row indicating the progress information of the measurement order is added to the progress situation screen, and "Manual" is displayed in the request source display column of this row. The display of "Manual" means that the measurement order of manual measurement is issued by the information processing unit 54. When the user checks the relevant progress situation screen, it can be recognized that the request source of the measurement order is the information processing unit 54 and that the measurement order is the measurement order of manual measurement. The smear preparing device 6 sometimes issues the process order (measurement order) such as issuing the process order of SP when the creating error of the smear occurs. When the smear preparing device 6 issues the process order, the process order is transmitted to the system control device 8, and one row indicating the progress information of the process order is added to the progress situation screen. "SP" is displayed in the request source display column of the relevant row. The display of "SP" indicates that the process order is issued by the smear preparing device 6. When the user checks the relevant progress situation screen, it can be recognized that the request source of the process order is the smear preparing device 6.

In the first embodiment, a configuration in which the barcode reader 516 is arranged inside the housing of the measurement unit 51, 52, 53 has been described, but is not limited thereto. A configuration in which the barcode reader 516 is arranged exterior to the housing, and the sample ID is read from the sample barcode of the sample container T held by the sample rack L on the measurement line 3M may be adopted.

In the first embodiment, a configuration in which the measurement unit 51, 52, 53 directly aspirates the sample from the sample container T being held in the sample rack L on the measurement line 3M may be adopted.

In the first embodiment, a configuration in which the sample ID is printed (recorded) on the barcode label BL as the sample barcode, and such sample ID is read by the barcode reader 22b, 516 has been described, but this is not the sole case. An RFID tag recorded with the sample ID may be attached to the sample container, and the receiver may receive the sample ID through wireless communication from the relevant RFID tag. A configuration in which the magnetic label where the sample ID is recorded as the magnetic code may be attached to the sample container, and the sample ID is read by a magnetic code reading device may be adopted, or a configuration in which a label printed with a character string indicating the sample ID is attached to the sample container, and such character string is imaged with a camera to acquire the sample ID by image processing may be adopted. Any configuration may be adopted as long as it is a configuration in which a recording medium recorded with the sample ID is attached to the sample container or the sample ID is directly recorded on the sample container, and the sample ID is read by the reading device.

In the first embodiment, the sample transporting device 3 is described as being configured by independent sample transport units 3a, 3b, 3c, 4, but is not limited thereto. A configuration in which the sample transporting section having an non-integral configuration is arranged on the front side of the measurement unit 51, 52, 53 and the smear preparing device 6, so that the sample rack L is transported to each measurement unit 51, 52, 53 and the smear preparing device 6 may be adopted. In the present embodiment, the sample transport system 100 has been described as being configured by the sample sending device 2, the sample transporting device 3, and the sample collecting device 7, but is not limited thereto. The sample processing system may be a configuration including a sample transport system having a non-integral configuration with the functions of the sample sending device 2, the sample transporting device 3, and the sample collecting device 7.

In the first embodiment, a configuration in which the measurement of the sample can be carried out for the CBC and the DIFF but the measurement of the sample cannot be carried out for the RET in the measurement units 51, 52, and the measurement of the sample can be carried out for the CBC, the DIFF, and the RET in the measurement unit 53 has been described, but is not limited thereto. For instance, all of the measurement units 51, 52, 53 may be able to measure the sample for the same measurement items (CBC, DIFF, RET).

In the first embodiment, a configuration of displaying the receiving position information and the request position information of the measurement order on the progress situation screen has been described, but is not limited thereto. Either one of the receiving position information or the request position information may be displayed on the progress situation screen. The request position information indicating the position of the sample when the system control device 8 requests the process order may be accumulated for every process order, and the request position information may be displayed for the process order in place of the receiving position information in the progress situation screen.

In the first embodiment, a configuration in which the blood analyzer 5 includes three measurement units 51, 52, 53 and the information processing unit 54 has been described, and in the second embodiment, a configuration in which the sample measurement device 101 includes one measurement unit 200 and one information processing unit 400 has been described, but these are not the sole cases. The measurement unit may be arranged in plurals other than three, and the measurement unit and the information processing unit may be integrally configured. The control of mechanism of the measurement units 51, 52, 53 may not be carried out by the information processing unit 54, and the respective measurement unit may include a control unit including a CPU and a memory so that each measurement unit is controlled by the control unit, and the measurement data obtained by the measurement unit may be processed by the information processing unit to generate the analysis result of the sample.

In the embodiments described above, a configuration of executing all processes of the computer program 84a with a single computer 8a has been described, but this is not the sole case, and a dispersed system in which the processes similar to the computer program 84a are executed in a dispersed manner by a plurality of devices (computers) may be adopted.

## Claims

1. A sample processing system (1) comprising:
a plurality of process order issuing units, each process order issuing unit configured to issue a process order for instructing processing of a sample;
a sample processing unit that processes the sample based on a process order issued by one of the process order issuing units;
a display unit (82); and
a controller configured to cause the display unit to display progress information indicating a progress situation of the processing of the sample based on the process order issued by the one of the process order issuing units,
**characterized in that**
the progress information includes identification information for identifying the process order issuing unit that issued the process order, and
the progress information displayed on the display unit (82) includes abnormality occurrence information indicating that abnormality occurred in the sample processing unit for carrying out the sample processing according to the issued process order.

2. The sample processing system (1) according to claim 1, wherein
when a plurality of process orders are issued with respect to one sample, the controller is configured to cause the display unit (82) to display order progress information of each issued process order related to the one sample as the progress information.

3. The sample processing system (1) according to claim 1 or claim 2, wherein
the progress information displayed on the display unit (82) includes issued time information indicating an issued time at which the process order was issued.

4. The sample processing system (1) according to claim 2 or claim 3, wherein
the process order issuing unit is configured to issue a first process order and then issue a second process order based on a result of sample processing according to the first process order, and
the controller is configured to cause the display unit to display the order progress information for each of the first process order and the second process order.

5. The sample processing system (1) according to claim 4, wherein
the order progress information displayed on the display unit (82) includes additional order information indicating that the second process order is an additional process order.

6. The sample processing system (1) according to claim 5, wherein
the sample processing unit is configured to process the sample for a plurality of processing items and is configured to execute a first re-process of again processing a sample, which was processed for a sample processing item, for the same sample processing item and a second re-process of again processing a sample, which was processed for a sample processing item, for a different processing item; and the additional order information is information for identifying the first re-process and the second re-process.

7. The sample processing system (1) according to any one of claim 1 to claim 6, wherein
the progress information displayed on the display unit (82) includes sample processing information indicating whether or not the sample processing instructed in the issued process order has been carried out.

8. The sample processing system (1) according to any one of claim 1 to claim 7, wherein
the plurality of process order issuing units include a first computer configured to control the sample processing unit and display a processing result by the sample processing unit.

9. The sample processing system (1) according to any one of claim 1 to claim 8, wherein
the plurality of process order issuing units include a first computer configured to control the sample processing unit and display a processing result by the sample processing unit, and a second computer communicably connected to another sample processing unit different from the sample processing unit controlled by the first computer, wherein the second computer manages processing results of the sample processing unit controlled by the first computer and the another sample processing unit, and
the controller displays information indicating the first computer as the identification information when the process order is issued by the first computer and displays information indicating the second computer as the identification information when the process order is issued by the second computer.

10. The sample processing system (1) according to claim 9, wherein
the first computer is configured to issue a second processing order based on the result of sample processing according to the first process order, and
the second computer is configured to issue a second process order based on the result of sample processing according to the first process order.

11. The sample processing system (1) according to any one of claim 1 to claim 10, wherein
the controller is configured to display a progress screen for displaying the progress information on the display unit (82),
the process order issuing unit is configured to additionally issue a second process order for the sample to which the first process order is issued,
the progress screen includes a first process order region for displaying progress information corresponding to the first process order and a second process order region for displaying progress information corresponding to the second process order when the first process order and the second process order are issued,
the first process order region includes a first progress information region for displaying first progress information showing progress of processing of the sample based on the first process order and a first identification information region for displaying first identification information for identifying the process order issuing unit that issued the first process order, and
the second process order region includes a second progress information region for displaying second progress information showing progress of processing of the sample based on the second process order and a second identification information region for displaying second identification information for identifying the process order issuing unit that issued the second process order.

12. The sample processing system (1) according to claim 11, wherein
the controller displays the first process order region in one row, and displays the second process order region in one row in the progress screen.

13. The sample processing system (1) according to claim 12, wherein
when a second process order is issued after a first process order is issued, the controller displays the second process order region in a row under the first process order region in the progress screen.

14. The sample processing system (1) according to any one of claim 1 to claim 13, further comprising an input device for inputting identification information identifying a sample, wherein
the controller is configured to cause the display unit to display the progress information related to the sample input by the input device.

## Patentansprüche

1. Probenverarbeitungssystem (1), umfassend:
eine Vielzahl von Verarbeitungsbefehlsausgabeeinheiten, wobei jede Verarbeitungsbefehlsausgabeeinheit dazu ausgelegt ist, einen Verarbeitungsbefehl zum Anweisen der Verarbeitung einer Probe auszugeben;
eine Probenverarbeitungseinheit, die die Probe basierend auf einem durch eine der Verarbeitungsbefehlsausgabeeinheiten ausgegebenen Verarbeitungsbefehl verarbeitet;
eine Anzeigeeinheit (82); und
eine Steuerung, die dazu ausgelegt ist, zu bewirken, dass die Anzeigeeinheit Fortschrittsinformationen anzeigt, die eine Fortschrittssituation der Verarbeitung der Probe basierend auf dem durch eine der Verarbeitungsbefehlsausgabeeinheiten ausgegebenen Verarbeitungsbefehl angeben,
**dadurch gekennzeichnet, dass**
die Fortschrittsinformationen Identifizierungsinformationen zum Identifizieren der Verarbeitungsbefehlsausgabeeinheit, die den Verarbeitungsbefehl ausgegeben hat, einschließen und
die auf der Anzeigeeinheit (82) angezeigten Fortschrittsinformationen Anomalienauftrittsinformationen einschließen, die angeben, dass in der Probenverarbeitungseinheit zum Ausführen der Probenverarbeitung gemäß dem ausgegebenen Verarbeitungsbefehl Anomalien aufgetreten sind.

2. Probenverarbeitungssystem (1) nach Anspruch 1, wobei
die Steuerung dazu ausgelegt ist, wenn eine Vielzahl von Verarbeitungsbefehlen in Bezug auf eine Probe ausgegeben werden, zu bewirken, dass die Anzeigeeinheit (82) Befehlsfortschrittsinformationen jedes die eine Probe betreffenden ausgegebenen Verarbeitungsbefehls als die Fortschrittsinformationen anzeigt.

3. Probenverarbeitungssystem (1) nach Anspruch 1 oder Anspruch 2, wobei
die auf der Anzeigeeinheit (82) angezeigten Fortschrittsinformationen ausgegebene Zeitinformationen einschließen, die eine ausgegebene Zeit angeben, zu der der Verarbeitungsbefehl ausgegeben wurde.

4. Probenverarbeitungssystem (1) nach Anspruch 2 oder Anspruch 3, wobei
die Verarbeitungsbefehlsausgabeeinheit dazu ausgelegt ist, einen ersten Verarbeitungsbefehl auszugeben und dann einen zweiten Verarbeitungsbefehl basierend auf einem Ergebnis der Probenverarbeitung gemäß dem ersten Verarbeitungsbefehl auszugeben, und
die Steuerung dazu ausgelegt ist, zu bewirken, dass die Anzeigeeinheit die Befehlsfortschrittsinformationen für jeden von dem ersten Verarbeitungsbefehl und dem zweiten Verarbeitungsbefehl anzeigt.

5. Probenverarbeitungssystem (1) nach Anspruch 4, wobei
die auf der Anzeigeeinheit (82) angezeigten Befehlsfortschrittsinformationen zusätzliche Befehlsinformationen einschließen, die angeben, dass der zweite Verarbeitungsbefehl ein zusätzlicher Verarbeitungsbefehl ist.

6. Probenverarbeitungssystem (1) nach Anspruch 5, wobei
die Probenverarbeitungseinheit dazu ausgelegt ist, die Probe für eine Vielzahl von Verarbeitungselementen zu verarbeiten, und dazu ausgelegt ist, eine erste Wiederverarbeitung des neuerlichen Verarbeitens einer Probe, die für ein Probenverarbeitungselement verarbeitet wurde, für dasselbe Probenverarbeitungselement und eine zweite Wiederverarbeitung des neuerlichen Verarbeitens einer Probe, die für ein Probenverarbeitungselement verarbeitet wurde, für ein anderes Probenverarbeitungselement durchzuführen; und die zusätzlichen Befehlsinformationen Informationen zum Identifizieren der ersten Wiederverarbeitung und der zweiten Wiederverarbeitung sind.

7. Probenverarbeitungssystem (1) nach einem der Ansprüche 1 bis 6, wobei
die auf der Anzeigeeinheit (82) angezeigten Fortschrittsinformationen Probenverarbeitungsinformationen einschließen, die angeben, ob die in dem ausgegebenen Verarbeitungsbefehl angewiesene Probenverarbeitung ausgeführt worden ist oder nicht.

8. Probenverarbeitungssystem (1) nach einem der Ansprüche 1 bis 7, wobei
die Vielzahl von Verarbeitungsbefehlsausgabeeinheiten einen ersten Computer einschließen, der dazu ausgelegt ist, die Probenverarbeitungseinheit zu steuern und ein Verarbeitungsergebnis durch die Probenverarbeitungseinheit anzuzeigen.

9. Probenverarbeitungssystem (1) nach einem der Ansprüche 1 bis 8, wobei
die Vielzahl von Verarbeitungsbefehlsausgabeeinheiten einen ersten Computer, der dazu ausgelegt ist, die Probenverarbeitungseinheit zu steuern und ein Verarbeitungsergebnis durch die Probenverarbeitungseinheit anzuzeigen, und einen zweiten Computer einschließen, der kommunikationsfähig mit einer anderen Probenverarbeitungseinheit verbunden ist, die sich von der durch den ersten Computer gesteuerten Probenverarbeitungseinheit unterscheidet, wobei der zweite Computer Verarbeitungsergebnisse der durch den ersten Computer gesteuerten Probenverarbeitungseinheit und der anderen Probenverarbeitungseinheit verwaltet, und
die Steuerung Informationen, die den ersten Computer angeben, als die Identifizierungsinformationen anzeigt, wenn der Verarbeitungsbefehl durch den ersten Computer ausgegeben wird, und Informationen, die den zweiten Computer angeben, als die Identifizierungsinformationen anzeigt, wenn der Verarbeitungsbefehl durch den zweiten Computer ausgegeben wird.

10. Probenverarbeitungssystem (1) nach Anspruch 9, wobei
der erste Computer dazu ausgelegt ist, einen zweiten Verarbeitungsbefehl basierend auf dem Ergebnis der Probenverarbeitung gemäß dem ersten Verarbeitungsbefehl auszugeben, und
der zweite Computer dazu ausgelegt ist, einen zweiten Verarbeitungsbefehl basierend auf dem Ergebnis der Probenverarbeitung gemäß dem ersten Verarbeitungsbefehl auszugeben.

11. Probenverarbeitungssystem (1) nach einem der Ansprüche 1 bis 10, wobei
die Steuerung dazu ausgelegt ist, einen Fortschrittsbildschirm zum Anzeigen der Fortschrittsinformationen auf der Anzeigeeinheit (82) anzuzeigen,
die Verarbeitungsbefehlsausgabeeinheit dazu ausgelegt ist, zusätzlich einen zweiten Verarbeitungsbefehl für die Probe auszugeben, an die der erste Verarbeitungsbefehl ausgegeben wird,
der Fortschrittsbildschirm einen ersten Verarbeitungsbefehlsbereich zum Anzeigen von Fortschrittsinformationen, die dem ersten Verarbeitungsbefehl entsprechen, und einen zweiten Verarbeitungsbefehlsbereich zum Anzeigen von Fortschrittsinformationen, die dem zweiten Verarbeitungsbefehl entsprechen, wenn der erste Verarbeitungsbefehl und der zweite Verarbeitungsbefehl ausgegeben werden, einschließt,
der erste Verarbeitungsbefehlsbereich einen ersten Fortschrittsinformationenbereich zum Anzeigen erster Fortschrittsinformationen, die einen Fortschritt der Verarbeitung der Probe basierend auf dem ersten Verarbeitungsbefehl zeigen, und einen ersten Identizifierungsinformationenbereich zum Anzeigen erster Identizifierungsinformationen zum Identifizieren der Verarbeitungsbefehlsausgabeeinheit, die den ersten Verarbeitungsbefehl ausgegeben hat, einschließt und
der zweite Verarbeitungsbefehlsbereich einen zweiten Fortschrittsinformationenbereich zum Anzeigen zweiter Fortschrittsinformationen, die einen Fortschritt der Verarbeitung der Probe basierend auf dem zweiten Verarbeitungsbefehl zeigen, und einen zweiten Identizifierungsinformationenbereich zum Anzeigen zweiter Identizifierungsinformationen zum Identifizieren der Verarbeitungsbefehlsausgabeeinheit, die den zweiten Verarbeitungsbefehl ausgegeben hat, einschließt.

12. Probenverarbeitungssystem (1) nach Anspruch 11, wobei
die Steuerung in dem Fortschrittsbildschirm den ersten Verarbeitungsbefehlsbereich in einer Reihe anzeigt und den zweiten Verarbeitungsbefehlsbereich in einer Reihe anzeigt.

13. Probenverarbeitungssystem (1) nach Anspruch 12, wobei
die Steuerung, wenn ein zweiter Verarbeitungsbefehl ausgegeben wird, nachdem ein erster Verarbeitungsbefehl ausgegeben wird, im Fortschrittsbildschirm den zweiten Verarbeitungsbefehlsbereich in einer Reihe unter dem ersten Verarbeitungsbefehlsbereich anzeigt.

14. Probenverarbeitungssystem (1) nach einem der Ansprüche 1 bis 13, weiter
umfassend eine Eingabevorrichtung zum Eingeben von
Identifizierungsinformationen, die eine Probe identifizieren, wobei
die Steuerung dazu ausgelegt ist, zu bewirken, dass die Anzeigeeinheit die Fortschrittsinformationen anzeigt, die die Probeneingabe durch die Eingabevorrichtung betreffen.

## Revendications

1. Système de traitement d'échantillon (1) comprenant :
une pluralité d'unités de fourniture d'ordre de traitement, chaque unité de fourniture d'ordre de traitement étant configurée pour fournir un ordre de traitement pour ordonner le traitement d'un échantillon ;
une unité de traitement d'échantillon qui traite l'échantillon sur la base d'un ordre de traitement fourni par l'une des unités de fourniture d'ordre de traitement ;
une unité d'affichage (82) ; et
un dispositif de commande configurée pour amener l'unité d'affichage à afficher des informations d'avancement indiquant une situation d'avancement du traitement de l'échantillon sur la base de l'ordre de traitement fourni par l'une des unités de fourniture d'ordre de traitement,
**caractérisé en ce que**
les informations d'avancement incluent des informations d'identification pour identifier l'unité de fourniture d'ordre de traitement qui a fourni l'ordre de traitement, et
les informations d'avancement affichées sur l'unité d'affichage (82) incluent des informations de survenue d'anomalie indiquant qu'une anomalie s'est produite dans l'unité de traitement d'échantillon pour mettre en oeuvre le traitement d'échantillon conformément à l'ordre de traitement fourni.

2. Système de traitement d'échantillon (1) selon la revendication 1, dans lequel
quand une pluralité d'ordres de traitement sont fournis par rapport à un échantillon, le dispositif de commande est configuré pour amener l'unité d'affichage (82) à afficher des informations d'avancement d'ordre de chaque ordre de traitement fourni associé à l'échantillon en tant qu'informations d'avancement.

3. Système de traitement d'échantillon (1) selon la revendication 1 ou la revendication 2, dans lequel
les informations d'avancement affichées sur l'unité d'affichage (82) incluent des informations de temps fourni indiquant un temps fourni auquel l'ordre de traitement a été fourni.

4. Système de traitement d'échantillon (1) selon la revendication 2 ou la revendication 3, dans lequel
l'unité de fourniture d'ordre de traitement est configurée pour fournir un premier ordre de traitement et ensuite fournir un second ordre de traitement sur la base d'un résultat de traitement d'échantillon conformément au premier ordre de traitement, et
le dispositif de commande est configuré pour amener l'unité d'affichage à afficher les informations d'avancement d'ordre pour chacun parmi le premier ordre de traitement et le second ordre de traitement.

5. Système de traitement d'échantillon (1) selon la revendication 4, dans lequel
les informations d'avancement d'ordre affichées sur l'unité d'affichage (82) incluent des informations d'ordre supplémentaires indiquant que le second ordre de traitement est un ordre de traitement supplémentaire.

6. Système de traitement d'échantillon (1) selon la revendication 5, dans lequel
l'unité de traitement d'échantillon est configurée pour traiter l'échantillon pour une pluralité d'éléments de traitement et est configurée pour exécuter un premier re-traitement pour traiter à nouveau un échantillon, qui a été traité pour un élément de traitement d'échantillon, pour le même élément de traitement d'échantillon et un second re-traitement pour traiter à nouveau un échantillon, qui a été traité pour un élément de traitement d'échantillon, pour un élément de traitement différent; et les informations d'ordre supplémentaires sont des informations pour identifier le premier re-traitement et le second re-traitement.

7. Système de traitement d'échantillon (1) selon l'une quelconque de la revendication 1 à la revendication 6, dans lequel
les informations d'avancement affichées sur l'unité affichage (82) incluent des informations de traitement d'échantillon indiquant si le traitement d'échantillon ordonné dans l'ordre de traitement fourni a été effectué ou non.

8. Système de traitement d'échantillon (1) selon l'une quelconque de la revendication 1 à la revendication 7, dans lequel
la pluralité d'unités de fourniture d'ordre de traitement incluent un premier ordinateur configuré pour commander l'unité de traitement d'échantillon et afficher un résultat de traitement par l'unité de traitement d'échantillon.

9. Système de traitement d'échantillon (1) selon l'une quelconque de la revendication 1 à la revendication 8, dans lequel
la pluralité d'unités de fourniture d'ordre de traitement incluent un premier ordinateur configuré pour commander l'unité de traitement d'échantillon et afficher un résultat de traitement par l'unité de traitement d'échantillon, et un second ordinateur connecté en communication à une autre unité de traitement d'échantillon différente de l'unité de traitement d'échantillon commandée par le premier ordinateur, dans lequel le second ordinateur gère les résultats de traitement de l'unité de traitement d'échantillon commandée par le premier ordinateur et l'autre unité de traitement d'échantillon, et
le dispositif de commande affiche des informations indiquant le premier ordinateur en tant qu'informations d'identification quand l'ordre de traitement est fourni par le premier ordinateur et affiche des informations indiquant le second ordinateur en tant qu'informations d'identification quand l'ordre de traitement est fourni par le second ordinateur.

10. Système de traitement d'échantillon (1) selon la revendication 9, dans lequel
le premier ordinateur est configuré pour fournir un second ordre de traitement sur la base du résultat de traitement d'échantillon conformément au premier ordre de traitement, et
le second ordinateur est configuré pour fournir un second ordre de traitement sur la base du résultat de traitement d'échantillon conformément au premier ordre de traitement.

11. Système de traitement d'échantillon (1) selon l'une quelconque de la revendication 1 à la revendication 10, dans lequel
le dispositif de commande est configuré pour afficher un écran d'avancement pour afficher les informations d'avancement sur l'unité d'affichage (82),
l'unité de fourniture d'ordre de traitement est configurée pour fournir en outre un second ordre de traitement pour l'échantillon pour lequel le premier ordre de traitement est fourni,
l'écran d'avancement inclut une première région d'ordre de traitement pour afficher des informations d'avancement correspondant au premier ordre de traitement et une seconde région d'ordre de traitement pour afficher des informations d'avancement correspondant au second ordre de traitement quand le premier ordre de traitement et le second ordre de traitement sont fournis,
la première région d'ordre de traitement inclut une première région d'informations d'avancement pour afficher des premières informations d'avancement montrant l'avancement du traitement de l'échantillon sur la base du premier ordre de traitement et une première région d'informations d'identification pour afficher des premières informations d'identification pour identifier l'unité de fourniture d'ordre de traitement qui a fourni le premier ordre de traitement, et
la seconde région d'ordre de traitement inclut une seconde région d'informations d'avancement pour afficher des secondes informations d'avancement montrant l'avancement du traitement de l'échantillon sur la base du second ordre de traitement et une seconde région d'informations d'identification pour afficher des secondes informations d'identification pour identifier l'unité de fourniture d'ordre de traitement qui a fourni le second ordre de traitement.

12. Système de traitement d'échantillon (1) selon la revendication 11, dans lequel
le dispositif de commande affiche la première région d'ordre de traitement dans une rangée, et affiche la seconde région d'ordre de traitement dans une rangée sur l'écran d'avancement.

13. Système de traitement d'échantillon (1) selon la revendication 12, dans lequel
quand un second ordre de traitement est fourni après qu'un premier ordre de traitement est fourni, le dispositif de commande affiche la seconde région d'ordre de traitement dans une rangée sous la première région d'ordre de traitement sur l'écran d'avancement.

14. Système de traitement d'échantillon (1) selon l'une quelconque de la revendication 1 à le revendication 13, comprenant en outre un dispositif d'entrée pour entrer des informations d'identification identifiant un échantillon, dans lequel
le dispositif de commande est configuré pour amener l'unité d'affichage à afficher les informations d'avancement associées à l'échantillon entrées par le dispositif d'entrée.
